(19) **Europäisches Patentamt**
**European Patent Office**
**Office européen des brevets**

(11) **EP 3 591 437 B1**

(12) **EUROPEAN PATENT SPECIFICATION**

(45) Date of publication and mention
of the grant of the patent:
**17.06.2026  Bulletin 2026/25**

(21) Application number: **18760328.7**

(22) Date of filing: **14.02.2018**

(51) International Patent Classification (IPC):
*G01S 17/894* (2020.01)   *G01S 7/486* (2020.01)
*G01S 7/48* (2006.01)   *G01S 17/931* (2020.01)
*G01S 17/87* (2020.01)   *G01S 17/42* (2006.01)
*G01S 7/4865* (2020.01)

(52) Cooperative Patent Classification (CPC):
**G01S 17/894; G01S 7/4865; G01S 7/4868;**
**G01S 17/42; G01S 17/87; G01S 17/931**

(86) International application number:
**PCT/JP2018/004984**

(87) International publication number:
**WO 2018/159289 (07.09.2018 Gazette 2018/36)**

(54) **DISTANCE MEASUREMENT DEVICE, DISTANCE MEASUREMENT METHOD, AND DISTANCE MEASUREMENT SYSTEM**

DISTANZMESSVORRICHTUNG, DISTANZMESSVERFAHREN UND DISTANZMESSSYSTEM

DISPOSITIF DE MESURE DE DISTANCE, PROCÉDÉ DE MESURE DE DISTANCE ET SYSTÈME DE MESURE DE DISTANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.02.2017   JP 2017037701**
**13.06.2017   JP 2017115827**

(43) Date of publication of application:
**08.01.2020   Bulletin 2020/02**

(73) Proprietor: **Sony Semiconductor Solutions Corporation**
**Atsugi-shi, Kanagawa 243-0014 (JP)**

(72) Inventor: **NAMBA, Kazuhide**
**Atsugi-shi**
**Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**WO-A1-2014/207983      WO-A1-2016/208215**
**WO-A2-2008/152647      JP-A- 2009 503 470**
**JP-A- H0 395 402      JP-B2- 2 644 895**
**JP-B2- 2 644 895      US-A- 5 221 928**

• **WHYTE, R. Z. ET AL.: "Multiple range imaging camera operation with minimal performance impact", PROCEEDINGS OF SPIE, vol. 7538, 29 January 2010 (2010-01-29), XP055555160, Retrieved from the Internet <URL:https://doi.org/10.1117/12.838271>**

EP 3 591 437 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present disclosure relates to a distance measurement apparatus, a distance measurement method, and a distance measurement system, and more particularly, to a distance measurement apparatus, a distance measurement method, and a distance measurement system that can reduce operation time by simplifying an AD (Analog-Digital) conversion process.

[Background Art]

A TOF (Time Of Flight) sensor is known as a distance measurement apparatus for measuring the distance to a target (hereinafter also referred to as performing distance measurement) (refer, for example, to PTL 1).
A TOF sensor emits irradiated light, light to be irradiated onto a target, and receives reflected light, irradiated light reflected from the target, thus finding time it takes from emission of the irradiated light to reception of the reflected light, i.e., a reflection time $\Delta t$ required for the irradiated light to return after its reflection from the target. Then, the sensor calculates a distance L to the target on the basis of the following equation (1) by using this reflection time $\Delta t$ and a speed of light c [m/s].

$$L = c \times \Delta t/2 \cdots (1)$$

JP H03 95402 A discloses that a laser light emitted from a laser oscillator 1 is modulated in intensity by a light modulator 2. In order to conduct modulation by a plurality of frequencies, two light-modulating elements are provided. A distance range for measurement is divided in a plurality and a long distance is measured primarily at a low modulation frequency, while the range of a relatively short distance is measured with high precision at a high modulation frequency. By combining these two measurements, it is made possible to measure the long distance with high precision. By raising the ratio of the modulation frequencies to (n)th power of 2, in addition, a value of the distance measured by the low modulation frequency is recorded in upper bits, while a value of the distance measured by the high modulation frequency is recorded in lower bits, and they are read out as continuous data, whereby distance measurement of a wide dynamic range is conducted. As the result, high-speed and highly-precise measurement of distances can be realized.
WO 2008/152647 A2 discloses a method for determining a distance to an object is performed as follows: First a first optical sensing element of an optical pixel is exposed to a back-reflected laser pulse for an initial time interval to obtain a first output level. Then a second optical sensing element of the optical pixel is exposed to the back-reflected laser pulse at a successive time interval to obtain a second output level. Finally, the distance to the object is calculated from the first and second output levels. Three-dimensional imaging may be performed for a sensor array in a two-stage process, by first determining whether an object is present in a pixel's distance sub-range. In some embodiments, the distance to the object is calculated from a pixel output level accumulated over multiple laser pulses.

[Citation List]

[Patent Literature]

[PTL 1]
Japanese Patent Laid-Open No. 2016-090268

[Summary]

[Technical Problem]

As described above, the TOF sensor finds the time $\Delta t$ it takes for the irradiated light to return after its reflection from the target and employs a solid-state imaging apparatus configured in a similar manner, for example, to a CMOS image sensor as a component for receiving the reflected light.
An ADC (Analog Digital Converter) for AD conversion of a pixel signal based on charge generated by photoelectric conversion is provided in the solid-state imaging apparatus. However, ADC operation includes a bottleneck, hampering speedup of operation of the TOF sensor as a whole.
The present disclosure has been devised in light of the foregoing circumstances and proposes speedup of the operation of the TOF sensor as a whole by speeding up the ADC operation and also a method of using the faster TOF sensor.

[Solution to Problem]

According to the present disclosure, there is provided a distance measurement apparatus, distance measurement method, and distance measurement system as defined in the appended set of claims.

A distance measurement apparatus according to claim 1 is provided.

A distance measurement method according to claim 12 is provided.

A distance measurement system according to claim 11 is provided.

[Advantageous Effect of Invention]

According to an aspect of the present disclosure, it is possible to speed up the operation of a TOF sensor as a whole by speeding up the operation of an ADC.

[Brief Description of Drawings]

[Fig. 1]

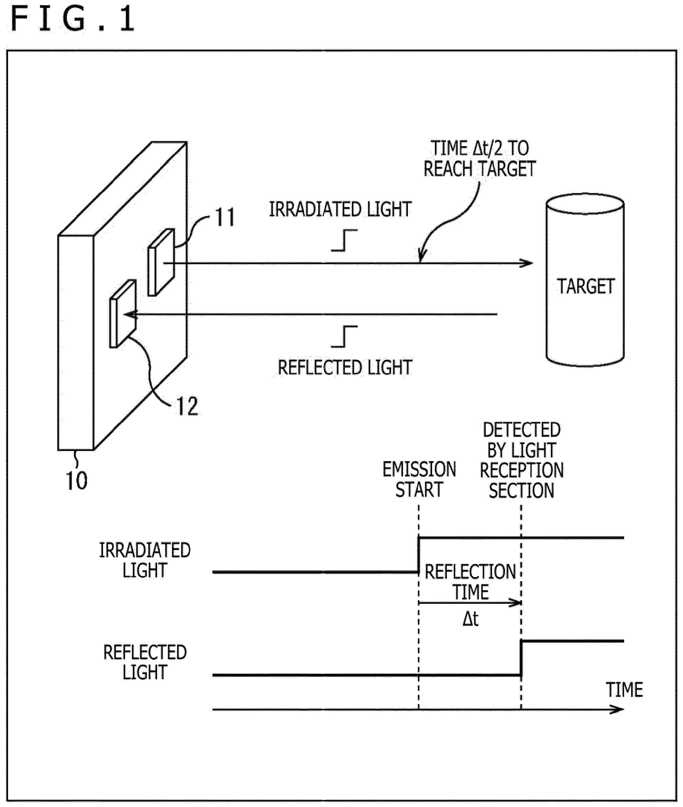

Fig. 1 is a diagram describing an overview of an embodiment of a TOF sensor to which the present disclosure is applied.

[Fig. 2]

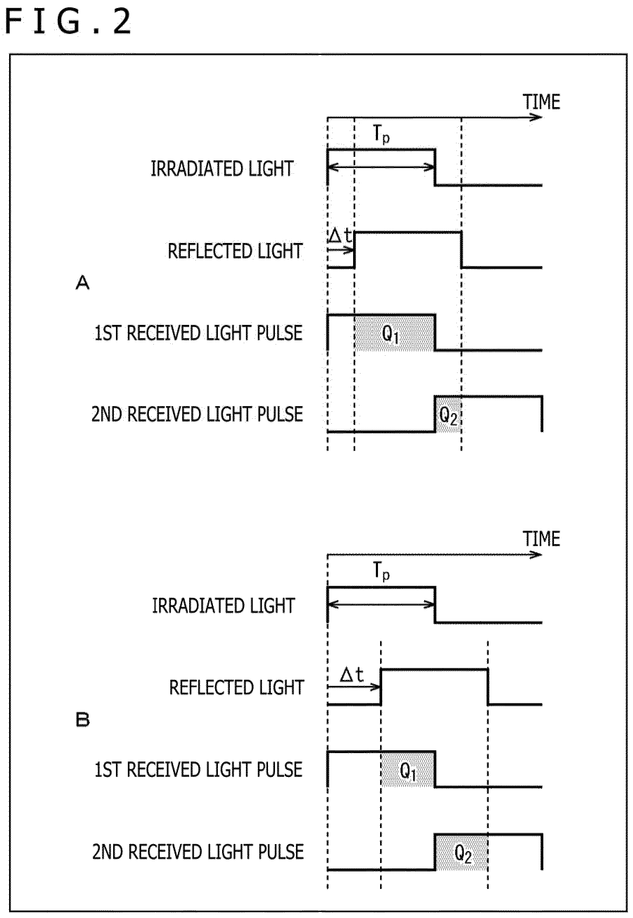

Fig. 2 depicts diagrams for describing a principle behind a first calculation method of a reflection time $\Delta t$.

[Fig. 3]

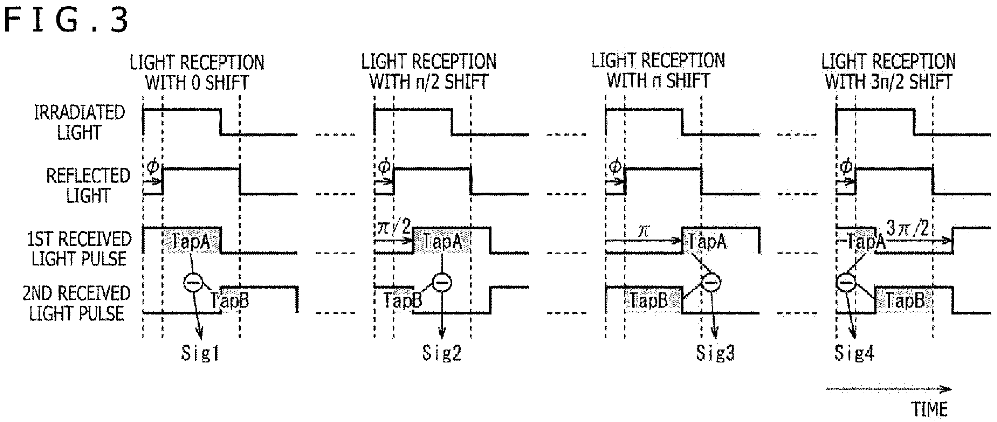

Fig. 3 is a diagram describing a principle behind a second calculation method of the reflection time $\Delta t$.

[Fig. 4]

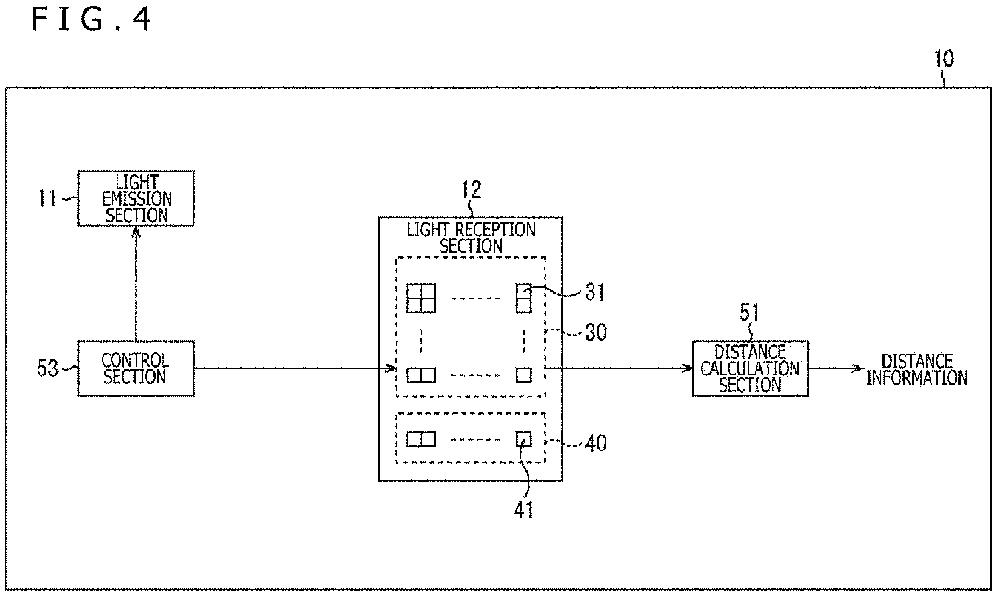

Fig. 4 is a block diagram illustrating a first configuration example of a TOF sensor 10.

[Fig. 5]

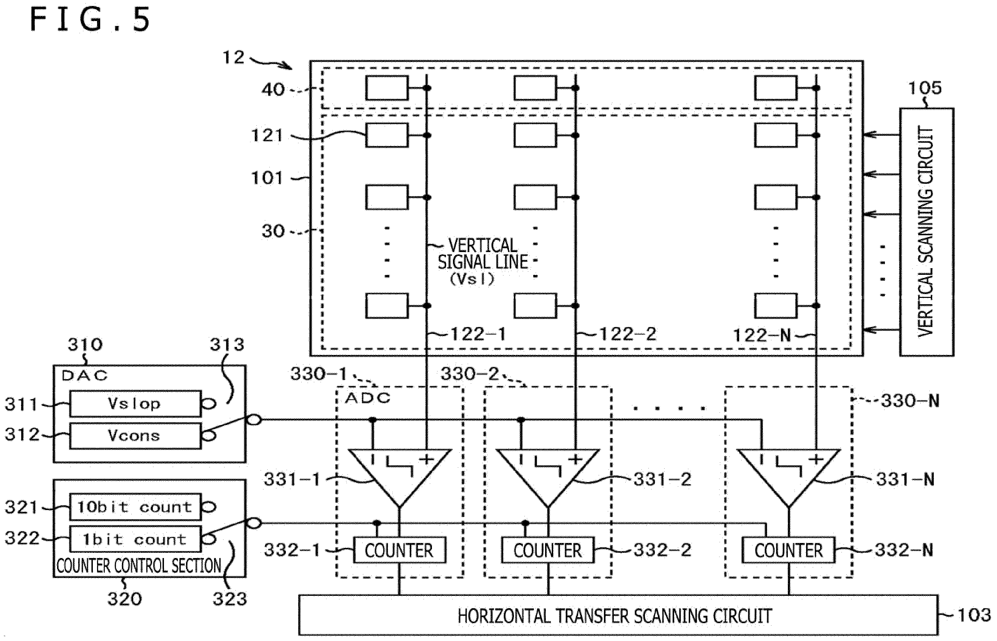

Fig. 5 is a block diagram illustrating a configuration example of a light reception section 12.

[Fig. 6]

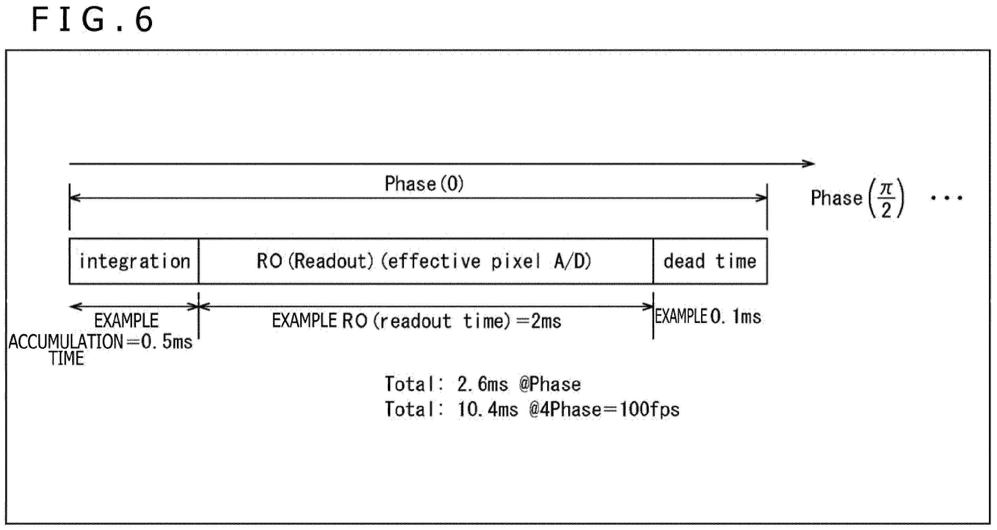

Fig. 6 is a diagram illustrating required time in the case where column ADCs 330 perform 10-bit AD conversion of pixel signals.

[Fig. 7]

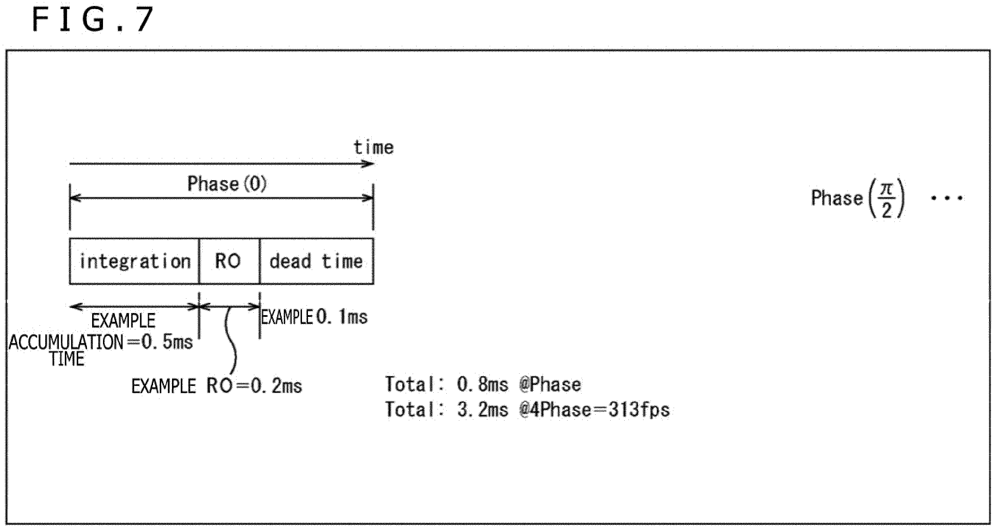

Fig. 7 is a diagram illustrating required time in the case where the column ADCs 330 perform one-bit AD conversion of the pixel signals.

[Fig. 8]

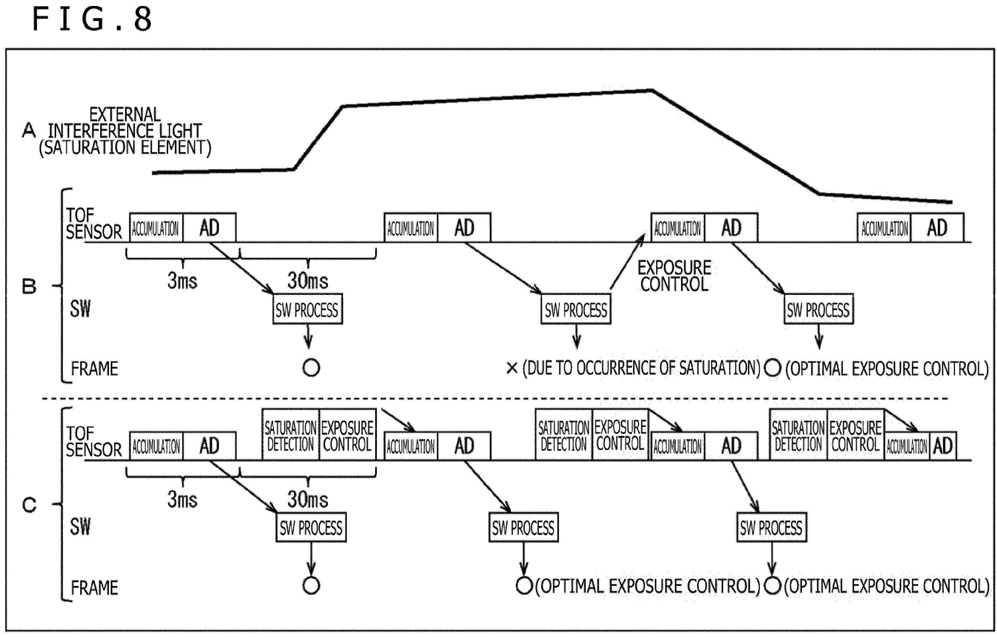

Fig. 8 depicts timing charts in the case where the one-bit AD conversion is used to detect saturation and exposure is controlled on the basis of the detection result thereof.

[Fig. 9]

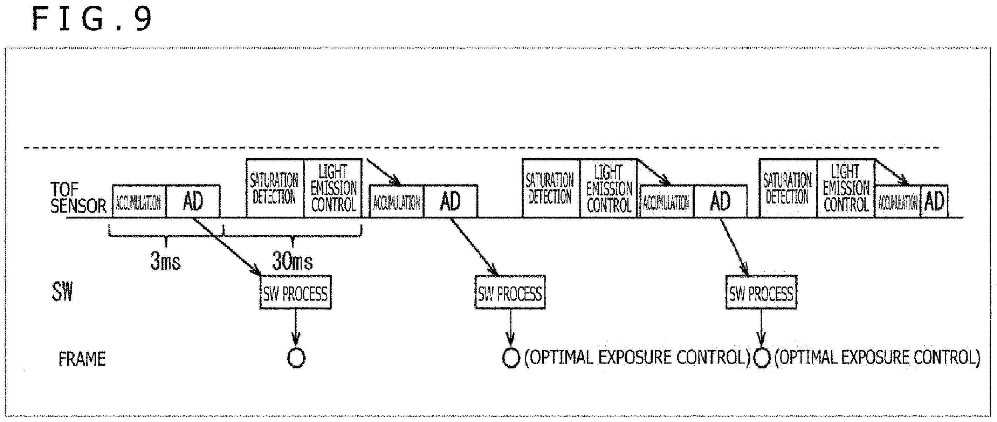

Fig. 9 is a timing chart in the case where the one-bit AD conversion is used to detect saturation and light emission is controlled on the basis of the detection result thereof.

[Fig. 10]

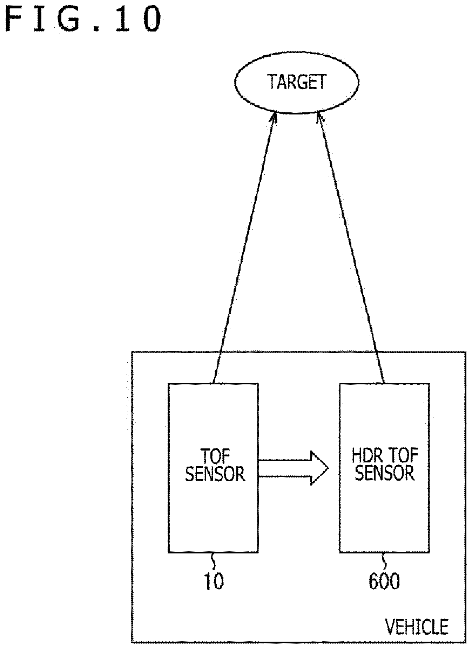

Fig. 10 is a diagram for describing coordinated operation between the TOF sensor 10 and an HDR (High Dynamic Range) TOF sensor 600.

[Fig. 11]

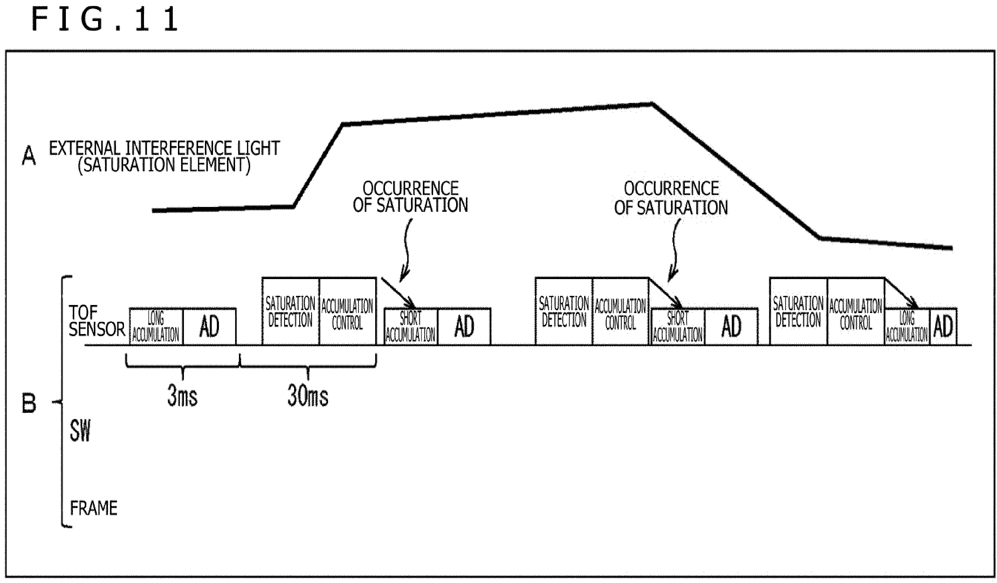

Fig. 11 depicts timing charts in the case where the one-bit AD conversion is used to detect saturation and the HDR TOF sensor 600 is controlled on the basis of the detection result thereof.

[Fig. 12]

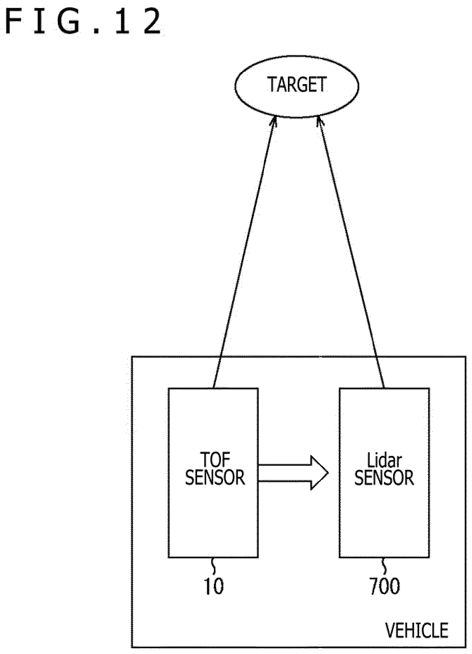

Fig. 12 is a diagram for describing coordinated operation between the TOF sensor 10 and a Lidar sensor 700.

[Fig. 13]

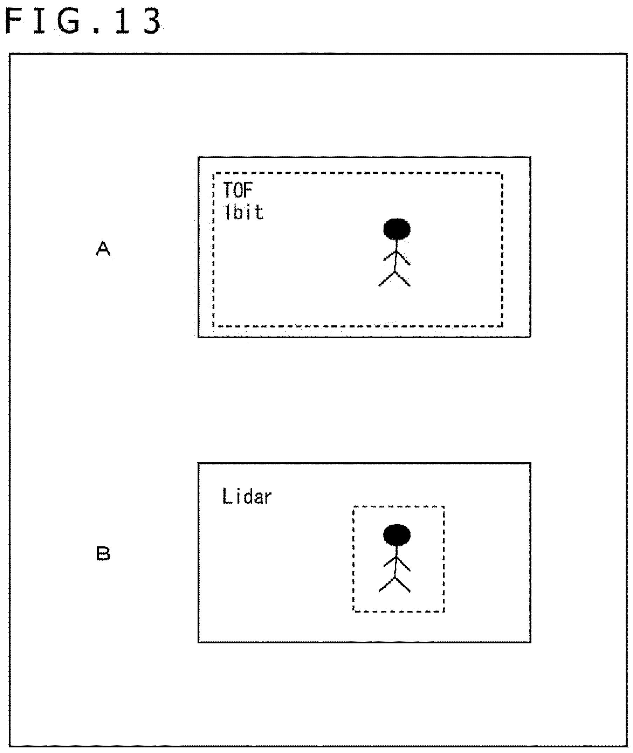

Fig. 13 depicts diagrams for describing coordinated operation between the TOF sensor 10 and the Lidar sensor 700.

[Fig. 14]

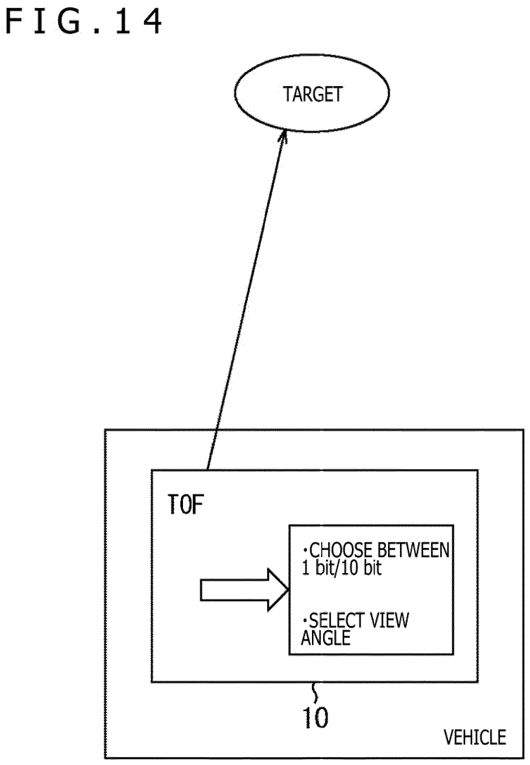

Fig. 14 is a diagram for describing first coordinated operation between one-bit fast distance measurement and 10-bit high accuracy distance measurement in the TOF sensor 10.

[Fig. 15]

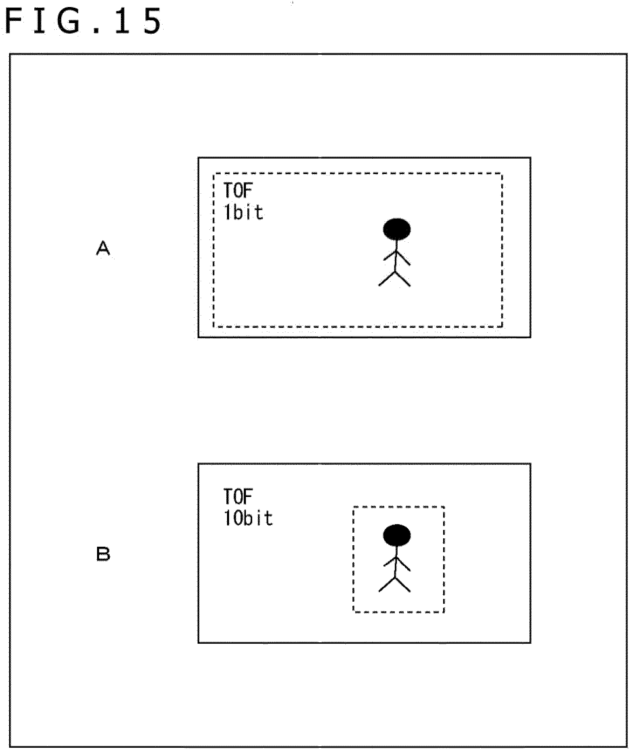

Fig. 15 depicts diagrams for describing the first coordinated operation between the one-bit fast distance measurement and the 10-bit high accuracy distance measurement in the TOF sensor 10.

[Fig. 16]

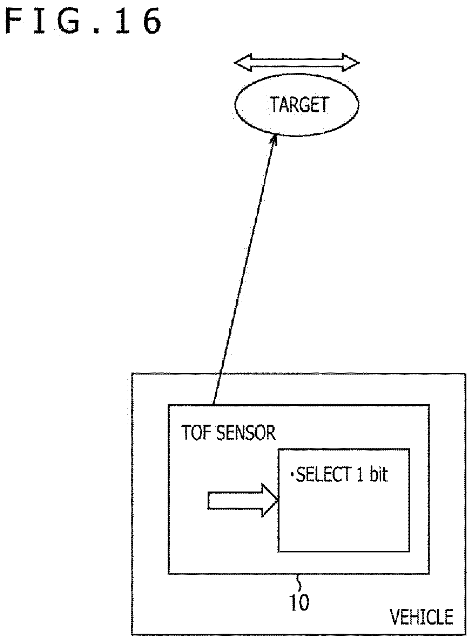

Fig. 16 is a diagram for describing second coordinated operation between the one-bit fast distance measurement and the 10-bit high accuracy distance measurement in the TOF sensor 10.

[Fig. 17]

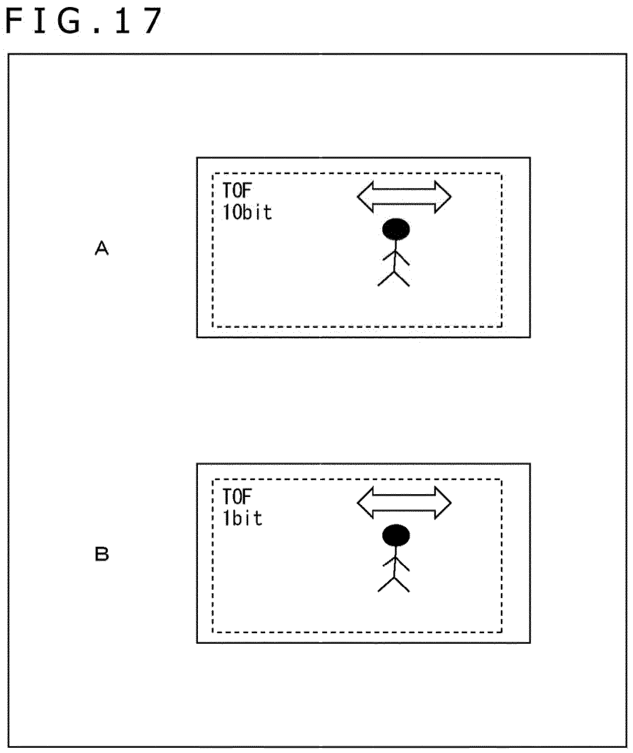

Fig. 17 depicts diagrams for describing the second coordinated operation between the one-bit fast distance measurement and the 10-bit high accuracy distance measurement in the TOF sensor 10.

[Fig. 18]

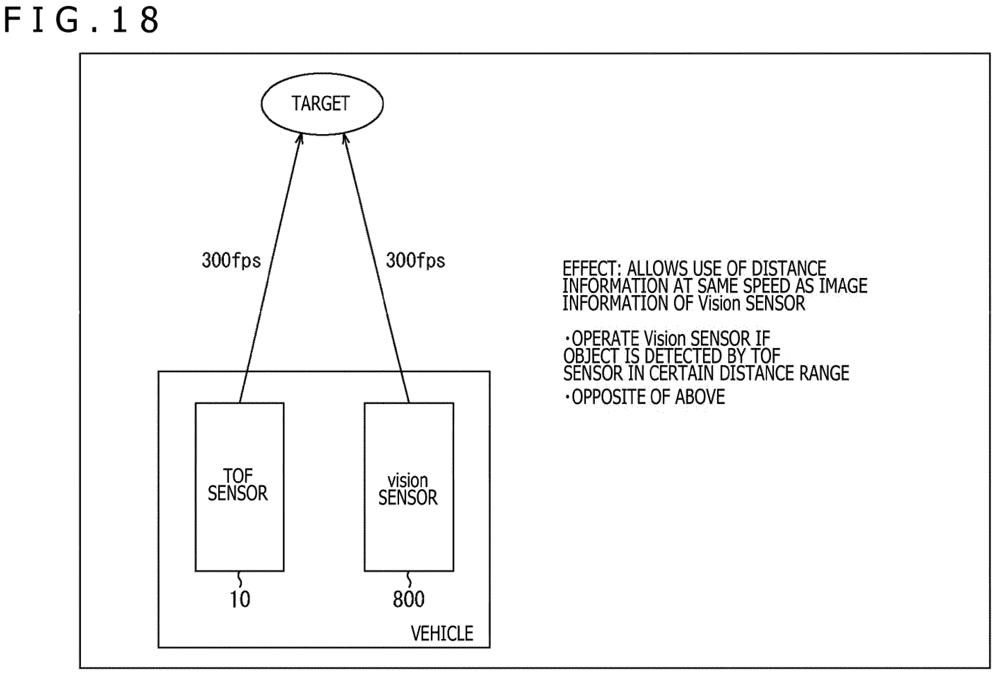

Fig. 18 is a diagram for describing coordinated operation between the TOF sensor 10 and a Vision sensor 800.

[Fig. 19]

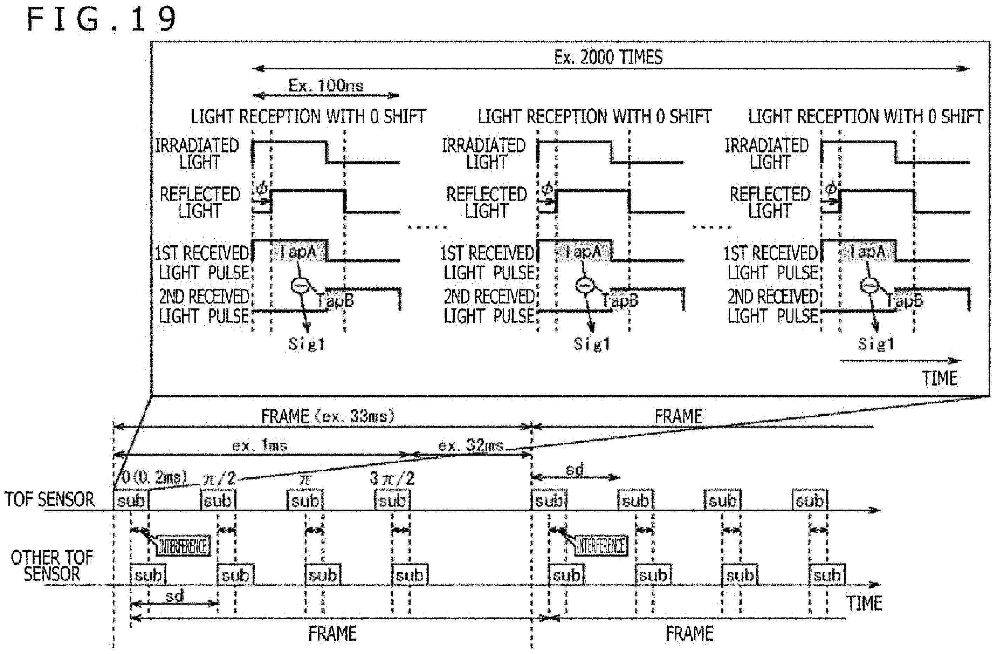

Fig. 19 is a timing chart describing an example of distance measurement in the case where the TOF sensor finds the reflection time $\Delta t$ by using the second calculation method.

[Fig. 20]

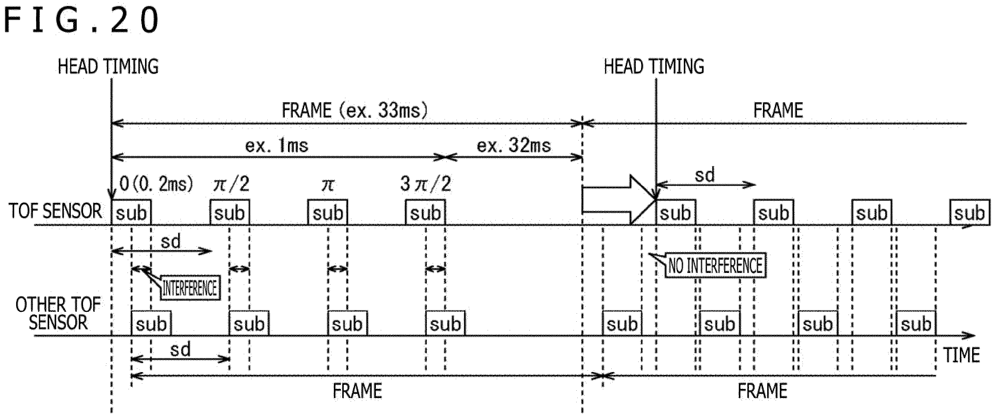

Fig. 20 is a timing chart describing an example of distance measurement in the case where the TOF sensor 10 to which an anti-interference countermeasure has been applied finds the reflection time $\Delta t$ by using the second calculation method.

[Fig. 21]

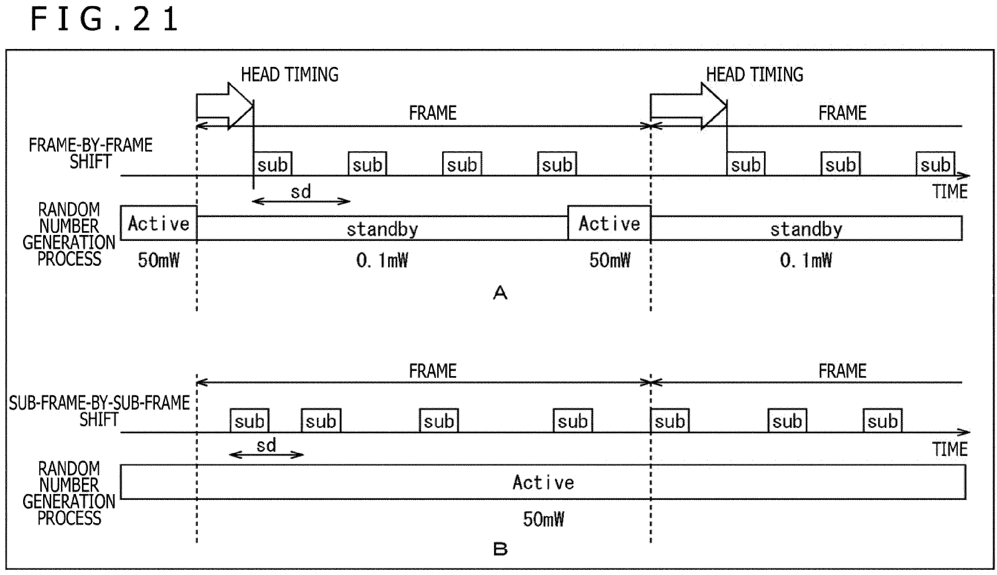

Fig. 21 depicts diagrams describing examples of power consumption in the case where a head timing is changed randomly frame by frame and in the case where a start timing is changed randomly sub-frame by sub-frame.

[Fig. 22]

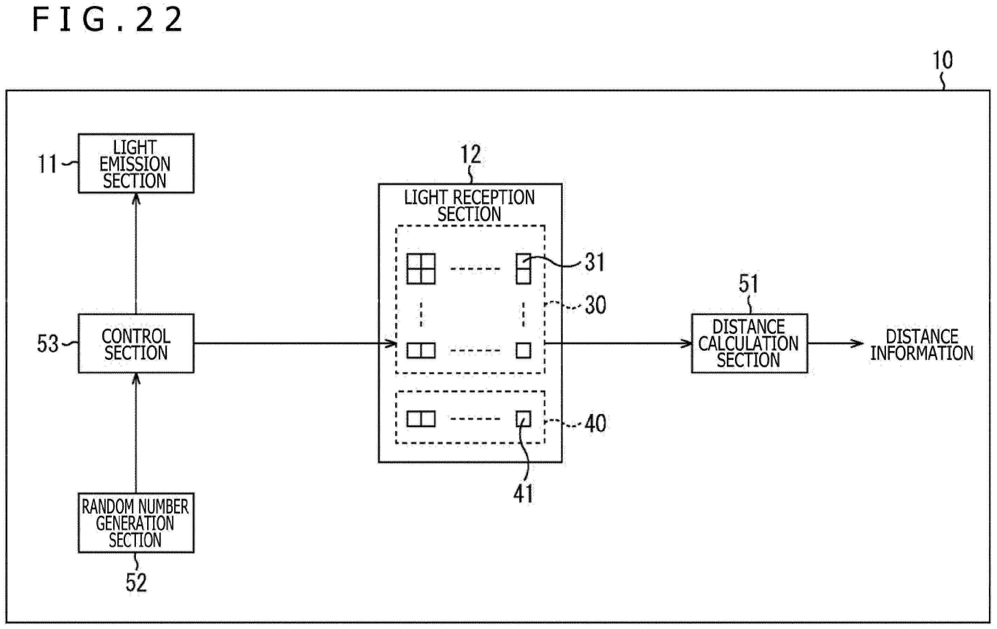

Fig. 22 is a block diagram illustrating a second configuration example of the TOF sensor 10.

[Fig. 23]

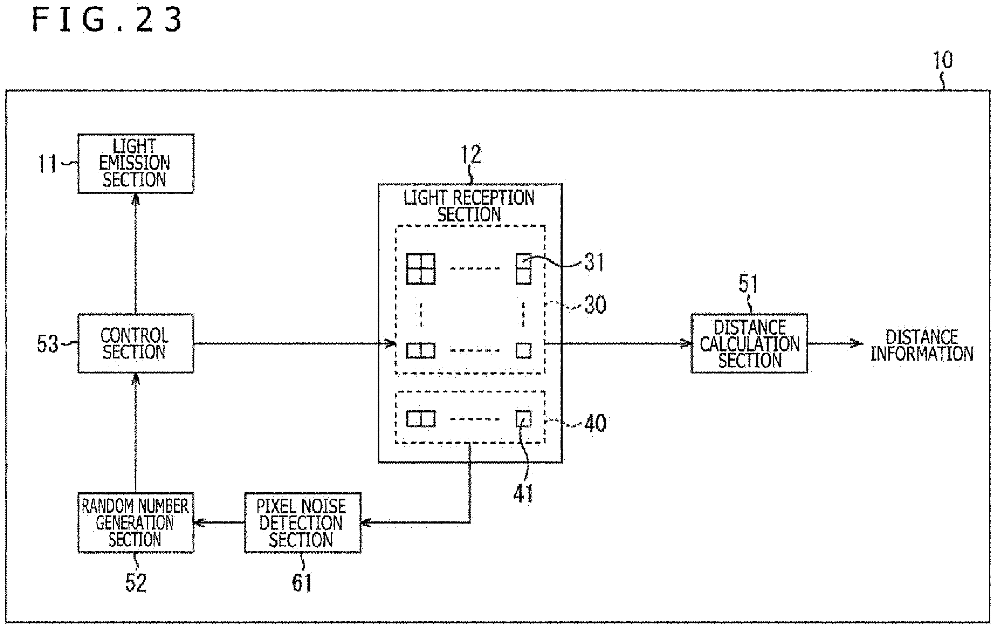

Fig. 23 is a block diagram illustrating a third configuration example of the TOF sensor 10.

[Fig. 24]

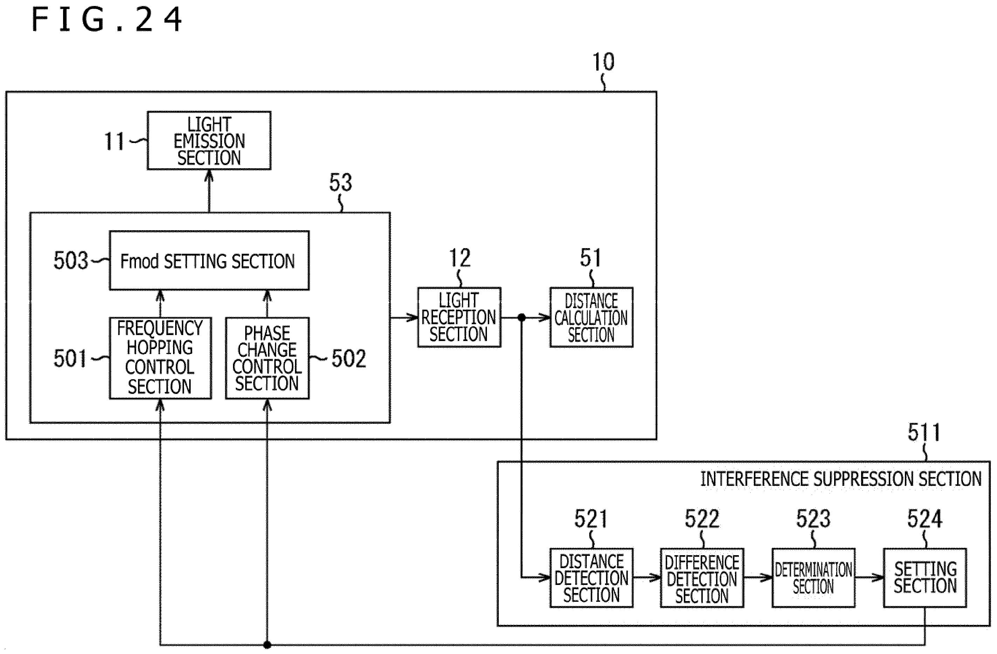

Fig. 24 is a block diagram illustrating a fourth configuration example of the TOF sensor 10.

[Fig. 25]

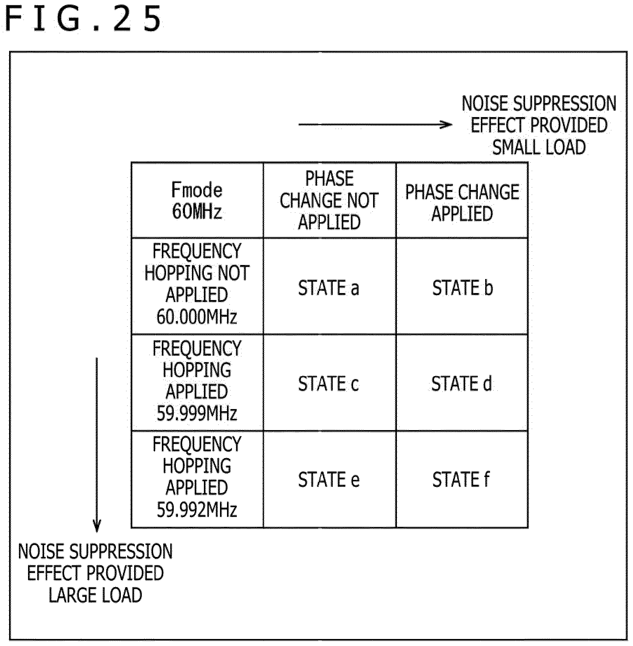

Fig. 25 is a diagram illustrating examples of states of a light emission frequency.

[Fig. 26]

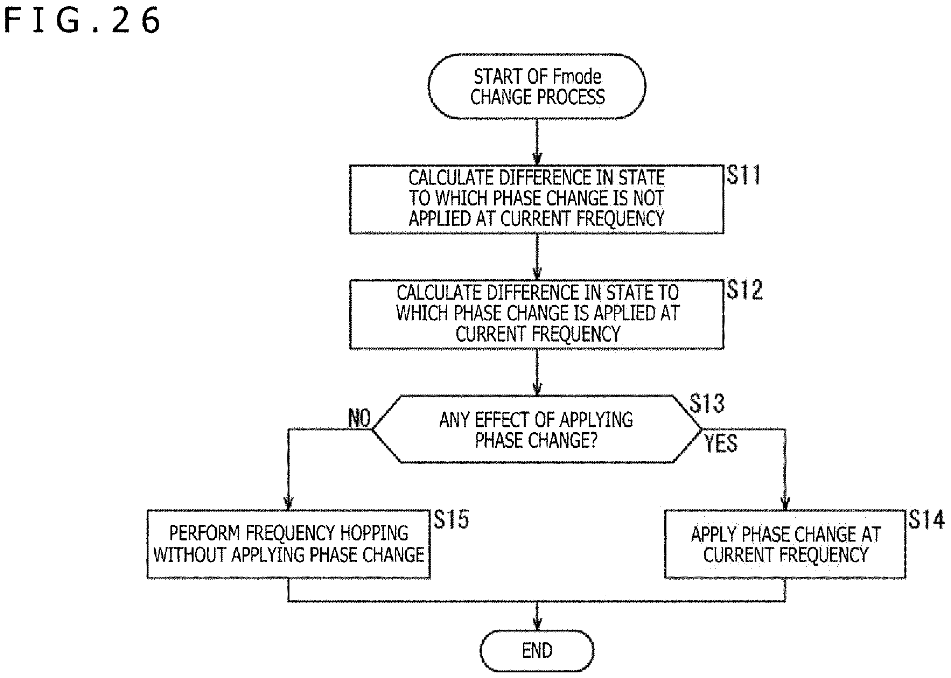

Fig. 26 is a flowchart describing a first light emission frequency Fmod change process.

[Fig. 27]

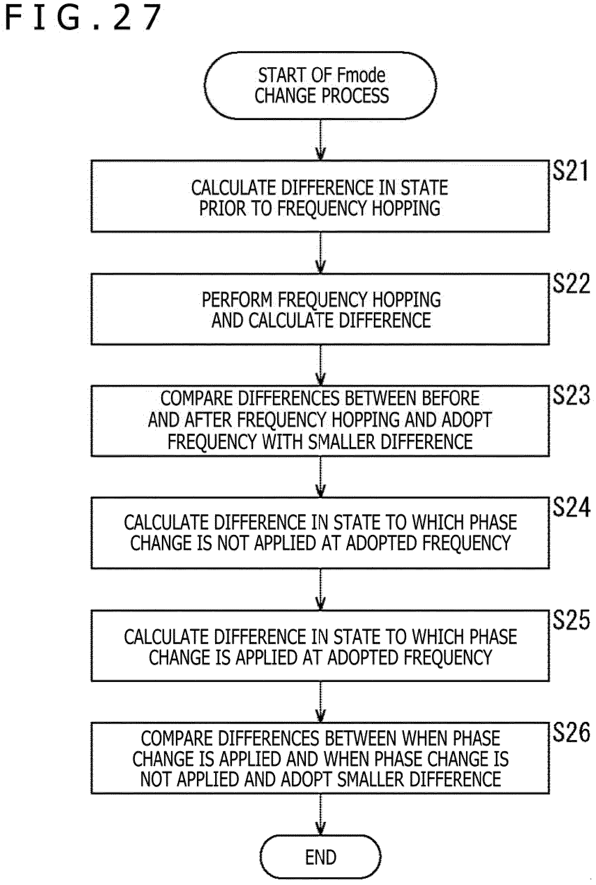

Fig. 27 is a flowchart describing a second light emission frequency Fmod change process.

[Fig. 28]

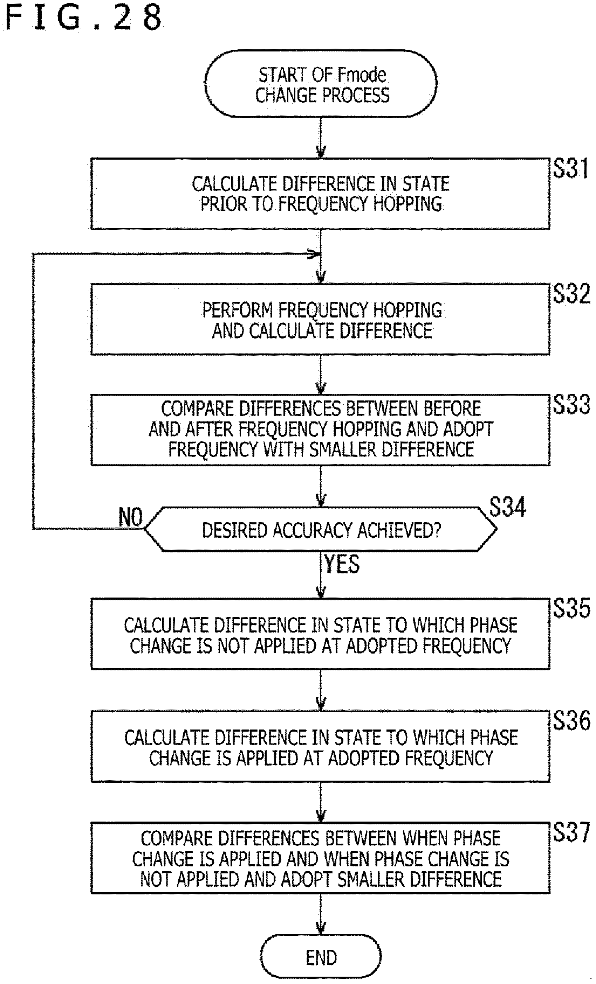

Fig. 28 is a flowchart describing a third light emission frequency Fmod change process.

[Fig. 29]

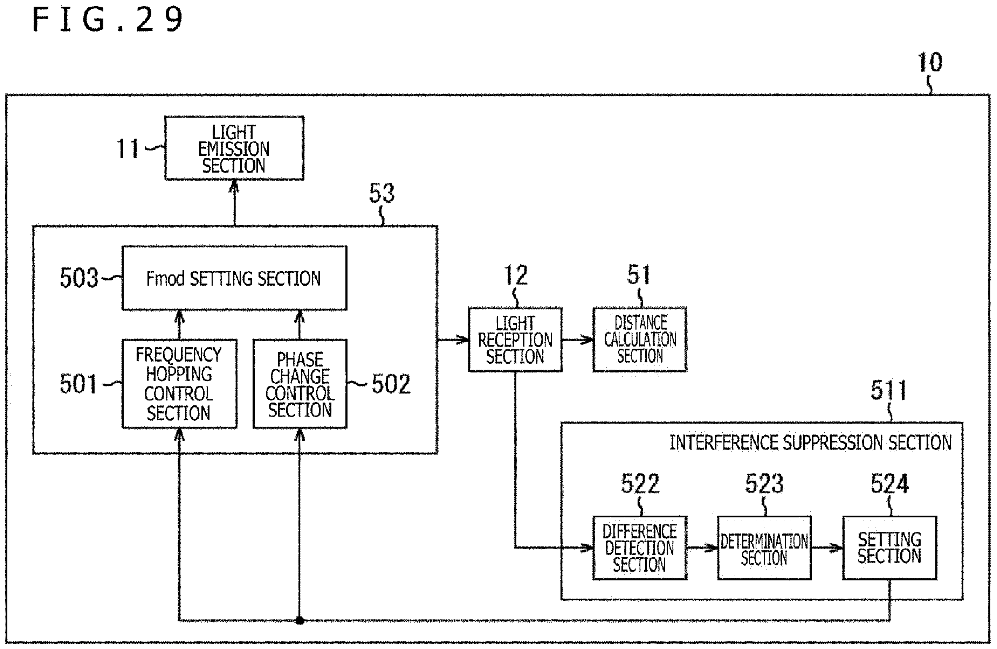

Fig. 29 is a block diagram illustrating a fifth configuration example of the TOF sensor 10.

[Fig. 30]

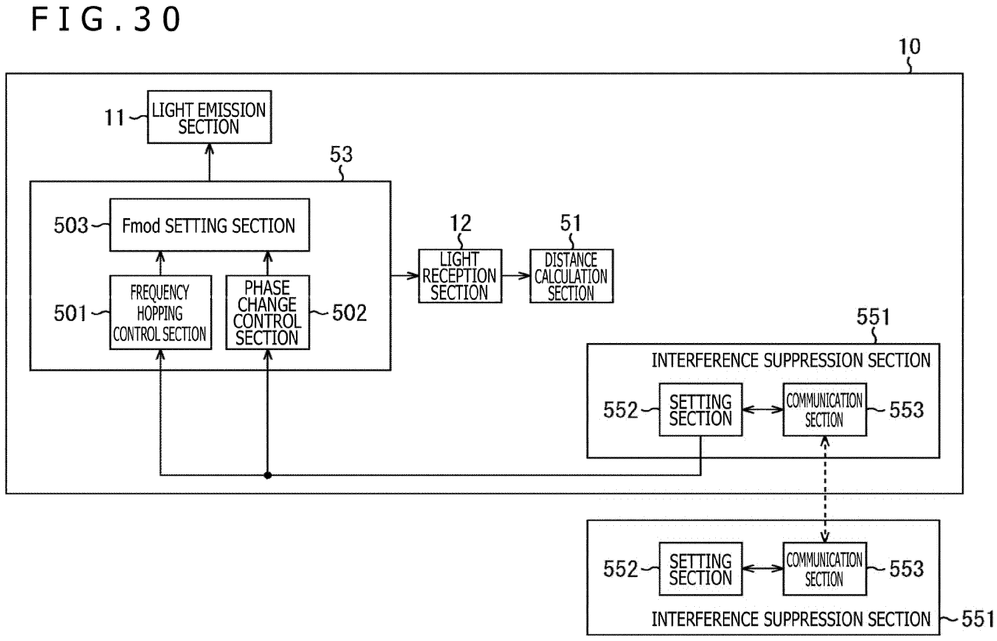

Fig. 30 is a block diagram illustrating a sixth configuration example of the TOF sensor 10.

[Fig. 31]

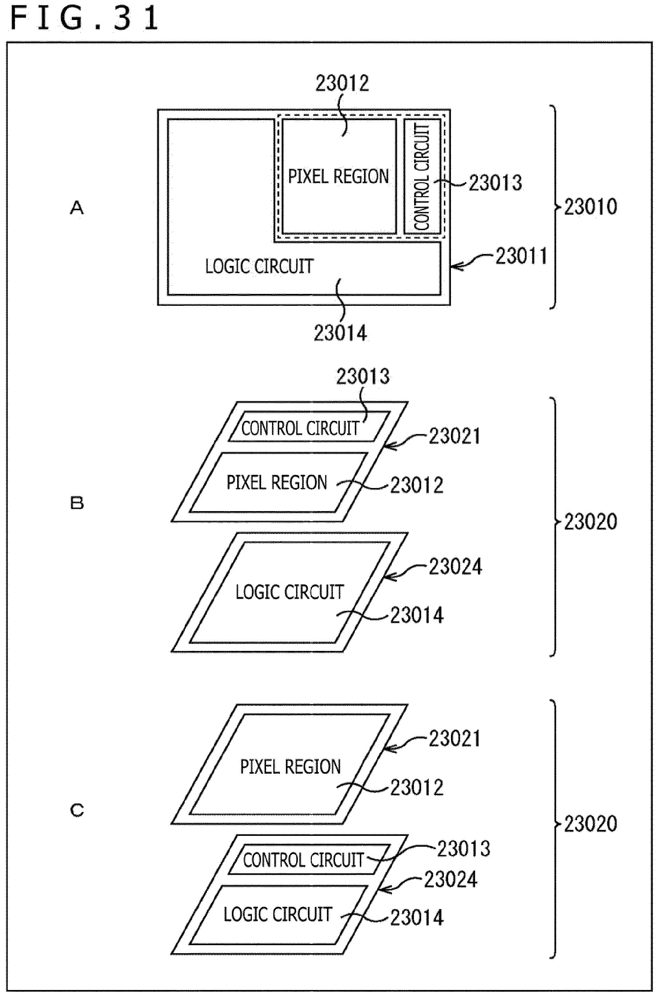

Fig. 31 depicts diagrams illustrating an overview of configuration examples of a solid-state imaging apparatus as an example of a stacked semiconductor apparatus to which the technology according to the present disclosure is applicable.

[Fig. 32]

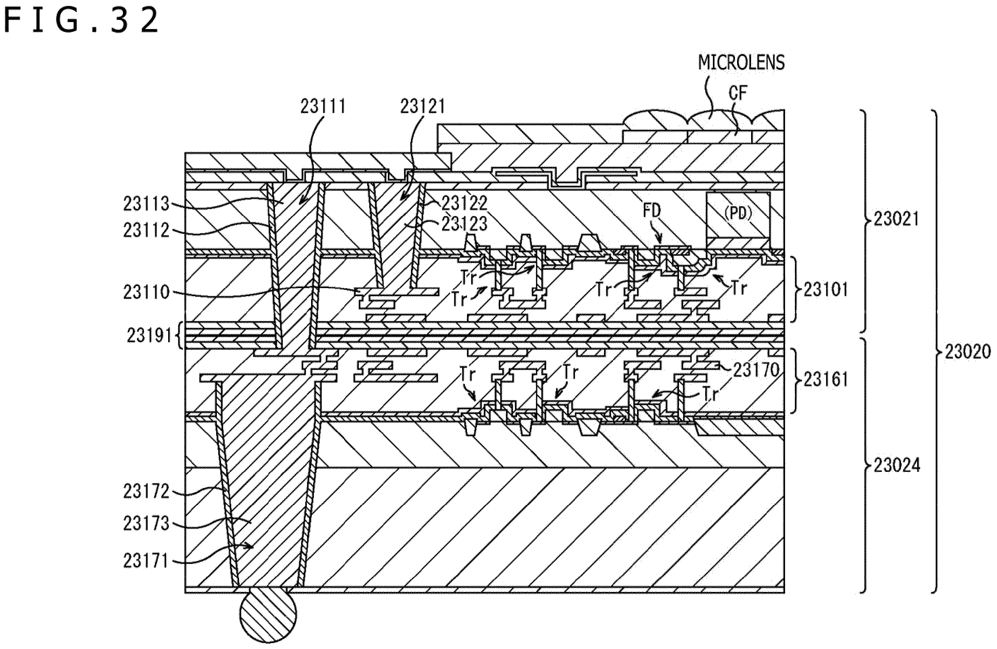

Fig. 32 is a sectional view illustrating a first configuration example of a stacked solid-state imaging apparatus 23020.

[Fig. 33]

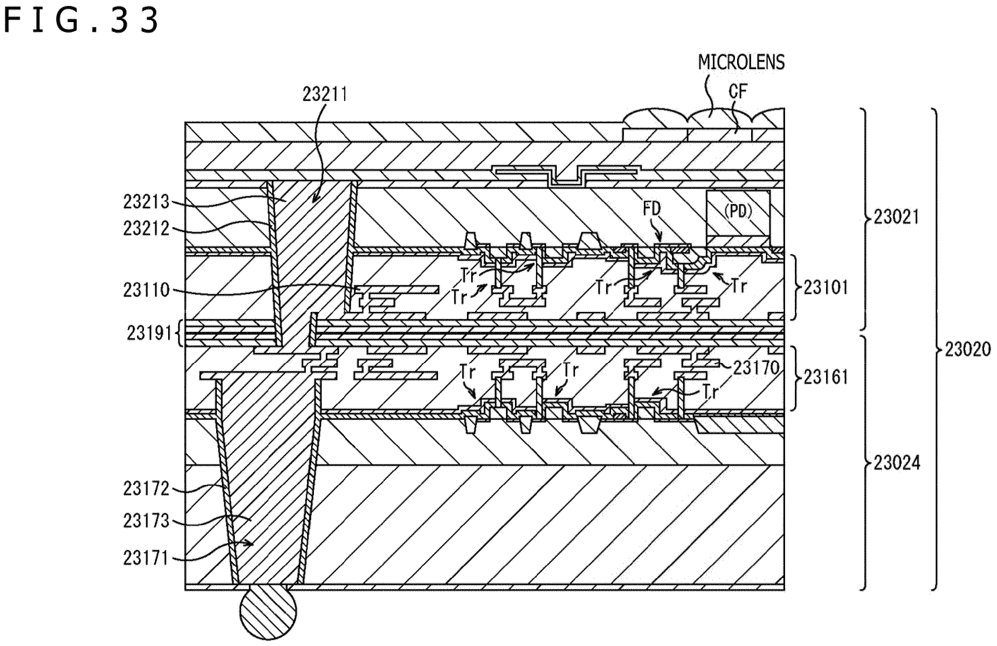

Fig. 33 is a sectional view illustrating a second configuration example of the stacked solid-state imaging apparatus 23020.

[Fig. 34]

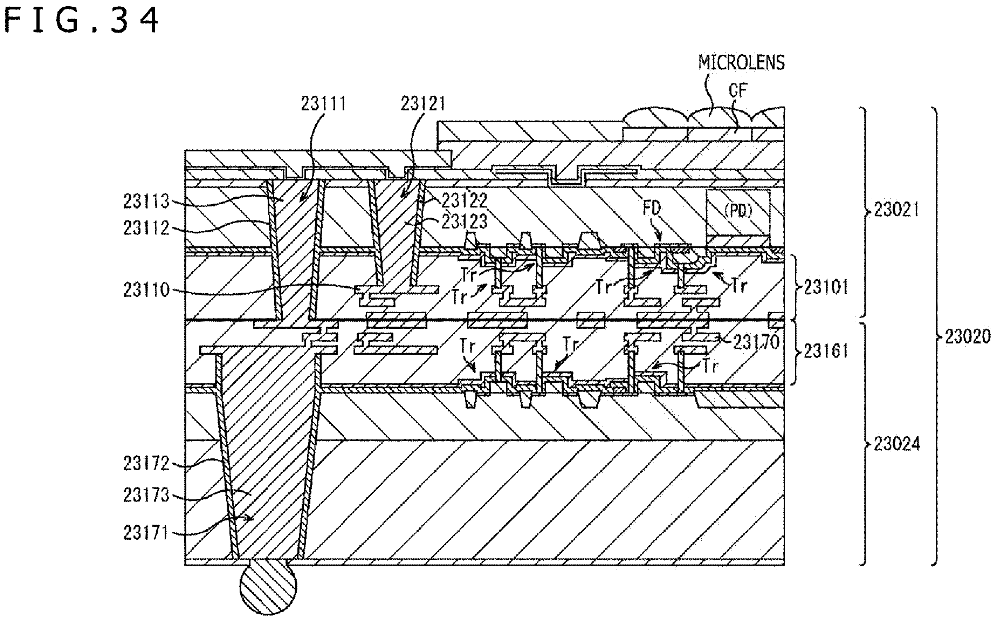

Fig. 34 is a sectional view illustrating a third configuration example of the stacked solid-state imaging apparatus 23020.

[Fig. 35]

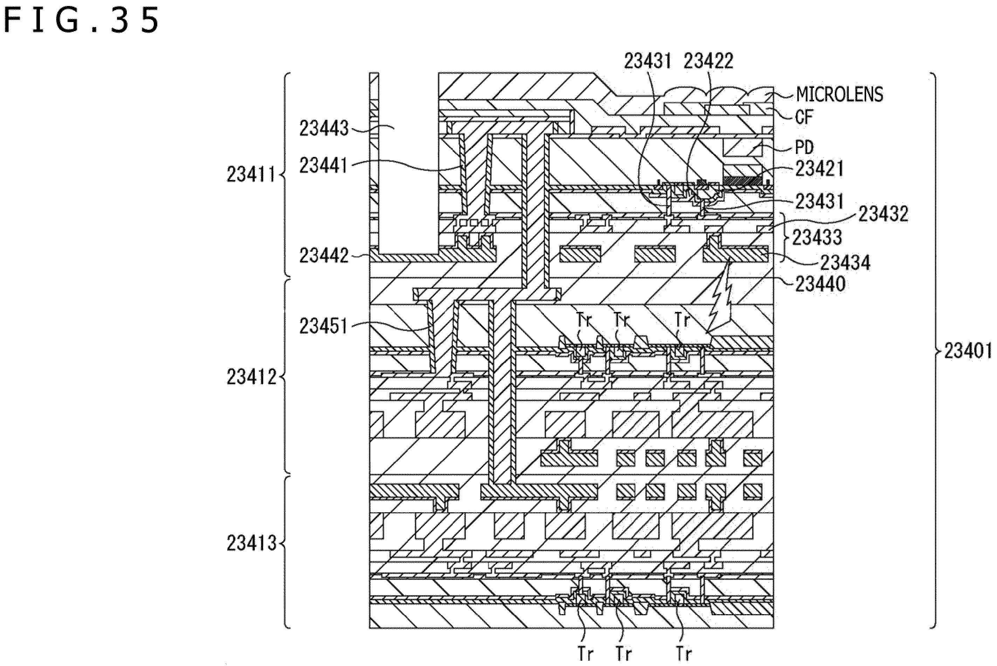

Fig. 35 is a sectional view illustrating another configuration example of a stacked solid-state imaging apparatus to which the technology according to the present disclosure is applicable.

[Fig. 36]

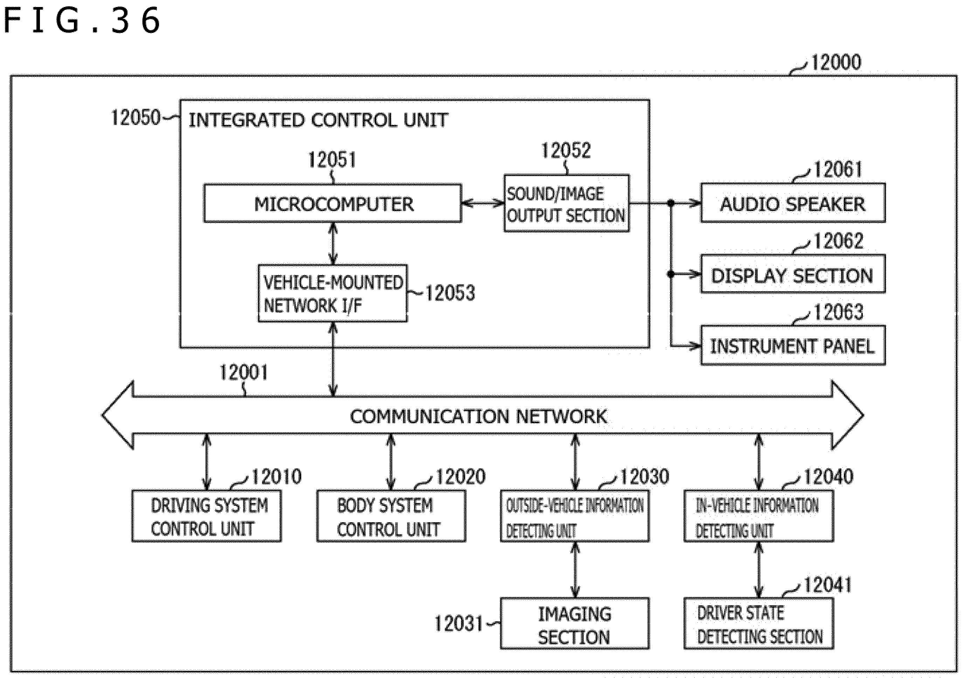

FIG. 36 is a block diagram depicting an example of schematic configuration of a vehicle control system.

[Fig. 37]

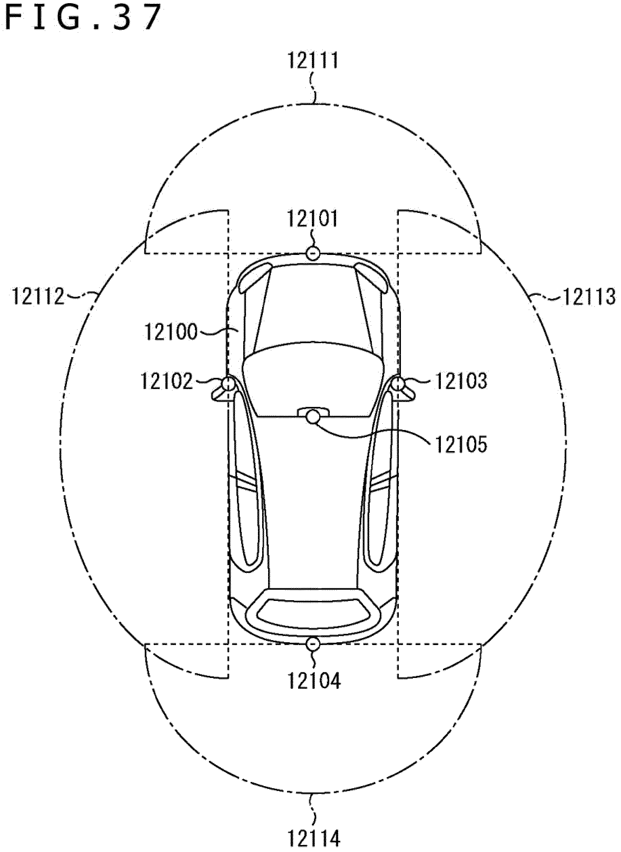

FIG. 37 is a diagram of assistance in explaining an example of installation positions of an outside-vehicle information detecting section and an imaging section.

[Description of Embodiment]

A detailed description will be given below of the best mode of carrying out the present disclosure (hereinafter referred to as an embodiment) with reference to drawings.

<Embodiment of the TOF sensor to which the present disclosure is applied>

Fig. 1 is a diagram describing an overview of an embodiment of a TOF sensor to which the present disclosure is applied.

A TOF sensor 10 includes a light emission section 11 and a light reception section 12 and measures a distance to a target through a TOF scheme.

The light emission section 11 emits irradiated light, given modulated light such as pulsed light to be irradiated onto a target.

The light reception section 12 receives reflected light of the irradiated light reflected from the target.

The TOF sensor 10 finds the time $\Delta t$ (hereinafter referred to as reflection time) it takes from emission of the irradiated light by the light emission section 11 to reception of the reflected light by the light reception section 12, thus calculating the distance L to the target on the basis of the equation (1) described above.

Therefore, the distance L to the target can be acquired by finding the reflection time $\Delta t$. However, the TOF sensor 10 or other sensor employs, for example, a first calculation method and a second calculation method to find the reflection time $\Delta t$.

<First calculation method of the reflection time $\Delta t$>

Fig. 2 depicts diagrams describing a principle behind the first calculation method of the reflection time $\Delta t$.

Here, for example, pulsed light having a given pulse width Tp is used as irradiated light.

The TOF sensor receives reflected light of irradiated light (irradiated light reflected by a target) when the reflection time $\Delta t$ corresponding to the distance L to the target elapses after emission of the irradiated light.

Now, a pulse having the same pulse width as and in phase with pulsed light as irradiated light will be referred to as a first received light pulse. Also, a pulse having the same pulse width as but out of phase with pulsed light as irradiated light by the pulse width Tp will be referred to as a second received light pulse.

In the first calculation method, reflected light is received during each of a first received light pulse (H (High) level) period and a second received light pulse period.

Now, the amount of charge of reflected light received during the first received light pulse period (amount of light received) is denoted as Q1, and the amount of charge of reflected light received during the second received light pulse period is denoted as Q2.

In this case, the reflection time $\Delta t$ can be found by the following equation (2).

$$\Delta t \ = \ Tp \ \times \ Q2/(Q1 \ + \ Q2) \ \cdots \ (2)$$

As is clear from the equation (2), the reflection time $\Delta t$ is proportional to the amount of charge Q2. Therefore, in the case where the distance L to the target is short, the amount of charge Q2 is small. In the case where the distance L to the target is long, the amount of charge Q2 is large.

Fig. 2A illustrates the irradiated light, the reflected light, the amount of charge Q1 of the first received light pulse, and the amount of charge Q2 of the second received light pulse in the case where the distance L to the target is short. Fig. 2B illustrates the irradiated light, the reflected light, the amount of charge Q1 of the first received light pulse, and the amount of charge Q2 of the second received light pulse in the case where the distance L to the target is long.

It should be noted that not only reflected light but also environmental light is actually received during the first and second received light pulse periods. Therefore, it is necessary to cancel the amount of charge of environmental light in order to calculate the reflection time $\Delta t$ (by extension, the distance L). It should be noted, however, that the description regarding the cancellation of the amount of charge of environmental light will be omitted in the present embodiment to facilitate the description.

<Second calculation method of the reflection time $\Delta t$>

Fig. 3 is a diagram describing a principle behind the second calculation method of the reflection time $\Delta t$.

In the second calculation method, pulsed light as irradiated light is emitted a plurality of times such as four times.

Then, light reception with a 0 shift, light reception with a $\pi/2$ shift, light reception with a $\pi$ shift, and light reception with a $3\pi/2$ shift are conducted respectively for the four emissions of pulsed light.

In light reception with a $\theta$ shift, reflected light is received by shifting the first and second received light pulses by $\theta$ [rad] from the case of the first calculation method. Here, the phase of the pulse width T of the pulsed light as the irradiated light is a $\pi$ [rad].

Now, in the light reception with a θ shift, the amount of charge of the reflected light received during the first received light pulse period is denoted as TapA, and the amount of charge of the reflected light received during the second received light pulse period is denoted as TapB.

Then, a difference TapA - TapB between the amount of charge TapA and the amount of charge TapB acquired by the light reception with a 0 shift is denoted as a differential signal Sig1.

Similarly, the differences TapA - TapB between the amounts of charge TapA and the amounts of charge TapB acquired by the light reception with a $\pi/2$ shift, the light reception with a $\pi$ shift, and the light reception with a $3\pi/2$ shift are denoted as differential signals Sig2, Sig3, and Sig4, respectively.

In this case, a phase difference $\varphi$ between the irradiated light and the reflected light can be found in accordance with the following equation (3).

$$\varphi = \mathrm{arctan}((Sig2 - Sig4)/(Sig1 - Sig3)) \ \cdots \ (3)$$

Further, the phase difference $\varphi$ and the reflection time $\Delta t$ are in one-to-one correspondence, and the reflection time $\Delta t$ can be found on the basis of the phase difference $\varphi$ in accordance with the following equation (4).

$$\Delta t = Tp \times \varphi/\pi \ \cdots \ (4)$$

Although the present disclosure is applicable to both the first and second calculation methods, a description will be given below by taking, as an example, of the first and second calculation methods, the second calculation method.

<First configuration example of the TOF sensor 10>

Fig. 4 is a block diagram illustrating a first configuration example of the TOF sensor 10 illustrated in Fig. 4.

The first configuration example has the light emission section 11, the light reception section 12, a distance calculation section 51, and a control section 53.

The light emission section 11 includes, for example, an LED (Light Emitting Diode) and irradiates light that flickers in synchronism with a light emission frequency Fmod (including phase information) under control of the control section 53 in the direction where a target can exist.

The light reception section 12 has an effective pixel section 30 and a dummy pixel section 40 and receives reflected light of the irradiated light emitted by the light emission section 11 and reflected from the target under control of the control section 53. It should be noted that a detailed configuration example of the light reception section 12 will be described later with reference to Fig. 5.

The effective pixel section 30 has a plurality of pixels 31, and the dummy pixel section 40 has a plurality of pixels 41.

The pixels 31 and 41 include, for example, PDs (photodiodes) that receive incident light and generate charge corresponding to the amount of incident light.

In the effective pixel section 30, the pixels 31 receive reflected light of the irradiated light emitted by the light emission section 11 under control of the control section 53, generate charge corresponding to the reflected light, i.e., for example, the amount of charge TapA of the reflected light received during the first received light pulse period and the amount of charge TapB of the reflected light received during the second received light pulse period described in Fig. 3, and supply the charge to the distance calculation section 51.

In the dummy pixel section 40, the pixels 41 are, for example, shielded from light, thus functioning as so-called OPB (Optical Black) pixels.

It should be noted that although, in the configuration example illustrated in Fig. 4, the pixels 31 included in the effective pixel section 30 and the pixels 41 included in the dummy pixel section 40 are arranged in separate areas to avoid complexity of the drawing, the pixels 41 may be arranged, for example, in such a manner as to be mixed with the pixels 31.

The distance calculation section 51 calculates, for example, the phase difference $\varphi$ as described in Fig. 3 by using the amount of charge from the pixels 31 and calculates the distance L to the target on the basis of the reflection time $\Delta t$ found from the phase difference $\varphi$. The distance calculation section 51 calculates the distance L and outputs, as distance information, a distance image having the distance L (value corresponding to the distance L) as a pixel value and other data to each of the pixels 31 included in the effective pixel section 30.

The control section 53 controls the emission of irradiated light by the light emission section 11 and the reception of reflected light by the pixels 31 of the light reception section 12.

<Configuration example of the light reception section 12>

Fig. 5 is a block diagram illustrating a configuration example of the light reception section 12.

The light reception section 12 is configured approximately in a similar manner to a solid-state imaging apparatus such as CMOS image sensor that employs column parallel ADCs (Analog Digital Converters) as illustrated in Fig. 5.

The light reception section 12 includes a pixel section 101, a horizontal transfer scanning circuit 103, a vertical scanning circuit 105, a DAC (Digital Analog Converter) 310, a counter control section 320, and column parallel ADCs 330. The column parallel ADCs 330 will be hereinafter referred to as the column ADCs 330.

The pixel section 101 is equivalent to the effective pixel section 30 and the dummy pixel section 40 illustrated in Fig. 4 and includes unit pixels 121, each including a PD and various pixel Trs (transistors), that are arranged in a matrix (columns and rows) pattern. The unit pixel 121 is equivalent to the pixels 31 and 41 in Fig. 4.

Also, the pixel section 101 has pixel drive lines (not depicted), one for each row of the pixels laid out in a matrix pattern, that are formed horizontally (in the direction along the pixel rows) in the figure and vertical signal lines 122-1 to 122-N, one for each column, that are formed vertically (in the direction along the pixel rows) in the figure. It should be noted that, in the description given below, in the case where there is no need to distinguish between the individual vertical signal lines 122-1 to 122-N in the description given below, the vertical signal lines 122-1 to 122-N will be denoted simply as the vertical signal lines 122. Other components will be denoted in a similar manner.

The vertical scanning circuit 105 is a pixel drive section that includes shift registers, address decoders, and so on and drives the pixels of the pixel section 101 all at the same time, on a row-by-row basis, or in other manner. Although the specific configuration thereof is not illustrated, this vertical scanning circuit 105 includes a read-out scanning system and a sweep-out scanning system or global sweep-out and global transfer.

Pixel signals (voltage signals VSL) output from the respective unit pixels 121 of the pixel row selectively scanned by the vertical scanning circuit 105 are supplied to column ADCs 330-1 to 330-N, respectively, via the vertical signal lines 122-1 to 122-N. The column ADCs 330 perform AD conversion by performing a given process on the pixel signals output from the respective unit pixels of the selected row via the vertical signal line 122 for each pixel column of the pixel section 101, thus supplying the AD-converted pixel signals to the horizontal transfer scanning circuit 103.

The horizontal transfer scanning circuit 103 includes shift registers, address decoders, and so on and selects, one after another, the respective unit circuits corresponding to the pixel columns of the column ASDCs 330-1 to 330-N. By the selective scan of the horizontal transfer scanning circuit 103, the pixel signals AD-converted by the column ADCs 330 are output, one after another, to the distance calculation section 51 at the subsequent stage.

The DAC 310 includes a Vslop 311, a Vcons 312, and a switch 313. The counter control section 320 includes a 10-bit count 321, a one-bit count 322, and a switch 323.

The column ADCs 330 include comparators 331 and counters 332, allowing for AD conversion, with two or more bit counts (i.e., accuracies), of the pixel signals from the unit pixels 121 supplied via the vertical signal lines 122. Hereinafter, we assume that the column ADCs 330 perform AD conversion of the pixel signals with 10-bit or one-bit accuracy. It should be noted, however, that these bit counts are merely examples, and that the bit count is not limited thereto. It should be noted that AD conversion performed with one-bit accuracy can be considered first AD conversion according to an aspect of the present disclosure, and AD conversion performed with 10-bit accuracy can be considered second AD conversion according to an aspect of the present disclosure.

In the case where the TOF sensor 10 performs distance measurement with high accuracy, the column ADCs 330 perform AD conversion with 10-bit accuracy. Conversely, in the case where the TOF sensor 10 performs distance measurement with low accuracy, the column ADCs 330 perform AD conversion with one-bit accuracy.

It should be noted that the case where the TOF sensor 10 performs distance measurement with low accuracy refers, for example, to a case where it is not necessary to find the distance to the target accurately and where it is sufficient that the existence of some kind of object halfway through a given distance can be detected.

In the case where the column ADCs 330 perform AD conversion with 10-bit accuracy, the switch 313 of the DAC 310 is connected to a side of the Vslop 311. Also, the switch 323 of the counter control section 320 is connected to a side of the 10-bit count 321 (both are states opposite to those illustrated in Fig. 5).

In this case, a reference voltage Vramp that varies in a ramp manner generated by the Vslop 311 of the DAC 310 is supplied to the comparators 331 of the column ADCs 330. Also, a control signal is supplied from the 10-bit count 321 of the counter control section 320 to the counters 332 of the column parallel ADCs 330, instructing that AD conversion be performed with 10 bits.

Then, in the column ADCs 330, the comparators 331 compare the reference voltage Vramp with the voltage signal VSL. In the case where the reference voltage Vramp is greater than the voltage signal VSL, the comparators 331 output "1" as an output signal VCO. Then, when the reference voltage Vramp falls below the voltage signal VSL, the comparators 331 output "0" as the output signal VCO, halting counting operation of the counters 332 at a trailing edge thereof. A count value VCNT has a one-to-one relationship with a voltage width swept by the reference voltage Vramp. This count value VCNT is supplied to the horizontal transfer scanning circuit 103 at the subsequent stage as a result of 10-bit AD conversion of the pixel signal.

On the other hand, in the case where the column ADCs 330 perform AD conversion with one-bit accuracy, the switch 313 of the DAC 301 is connected to the side of the Vcons 312. Also, the switch 323 of the counter control section 320 is connected to the side of the one-bit count 322 (both are the states illustrated in Fig. 5).

In this case, a constant voltage Vcons, generated by a Vcons 312 of the DAC 310, is supplied to the comparators 331 of the column ADCs 330. Also, a control signal is supplied from the one-bit count 321 of the counter control section 320 to the counter 332 of each of the column ADCs 330, instructing that AD conversion be performed with one bit.

Then, in the column ADCs 330, the comparators 331 compare the constant voltage Vcons with the voltage signal VSL. In the case where the constant voltage Vcons is greater than the voltage signal VSL, the comparators 331 output "1" as the output signal VCO. Then, when the constant voltage Vcons falls below the voltage signal VSL, the comparator 331 outputs "0" as the output signal VCO. Then, the fact that the output signal VCO of the comparator 331 is inverted from "1" to "0" is used as a trigger, and a digital code (e.g., "1" in the case where the voltage signal VSL is greater than the reference voltage and "0" in the case where the voltage signal VSL is smaller) generated by the one-bit count 322 is latched into the counters 332 (latch sections), in response to the inverted input signal of the comparator 331. Then, this digital code is supplied to the horizontal transfer scanning circuit 103 at the subsequent stage as a result of the one-bit AD conversion of the pixel signal.

<Comparison between AD conversion of the pixel signals with 10-bit accuracy and AD conversion of the pixel signals with one-bit accuracy using the column ADCs 330>

A comparison will be made between AD conversion of the pixel signals performed with 10-bit accuracy and that with one-bit accuracy using the column ADCs 330 in terms of time required for a single light reception with a $\theta$ shift in the above second calculation method of the reflection time $\Delta t$.

Time required for a single light reception with a $\theta$ shift includes charge accumulation time (integration) in the unit pixel 121, time required for AD conversion (RO), and interval to the next light reception with a $\theta$ shift (dead time).

Fig. 6 illustrate a case where the column ADCs 330 perform AD conversion of the pixel signals with 10-bit accuracy. In the case of Fig. 6, for example, a total of 2.6 [ms], including 0.5 [ms] for the accumulation time, 2 [ms] for the time required for 10-bit AD conversion, and 0.1 [ms] for the interval to the next light reception with a $\theta$ shift, is required. Therefore, one frame in the second calculation method of the reflection time $\Delta t$ (time required for four (4) light receptions with a $\theta$ shift) is 10.4 [ms], thus providing a frame rate of 100 fps. In the description given below, AD conversion of pixel signals by the column ADCs 330 with 10-bit accuracy (high accuracy operation) and distance measurement with high accuracy on the basis of the result thereof will be referred to as 10-bit high accuracy distance measurement.

Fig. 7 illustrates a case where the column ADCs 330 perform AD conversion of the pixel signals with one-bit accuracy. In the case of Fig. 7, for example, a total of 0.8 [ms], including 0.5 [ms] for the accumulation time, 0.2 [ms] for the time required for one-bit AD conversion, and 0.1 [ms] for the interval (dead time) to the next light reception with a $\theta$ shift, is required. Therefore, one frame in the second calculation method of the reflection time $\Delta t$ (time required for four (4) light receptions with a $\theta$ shift) is 3.2 [ms], thus providing a frame rate of 313 fps. In the description given below, AD conversion of pixel signals by the column ADCs 330 with one-bit accuracy (fast operation) and distance measurement with low accuracy on the basis of the result thereof will be referred to as one-bit fast distance measurement.

As is obvious from the comparison between Figs. 6 and 7, it is clear that one-bit fast distance measurement ensures significant speedup as compared to 10-bit high accuracy distance measurement.

It should be noted, however, that one-bit fast distance measurement is low in accuracy as compared to 10-bit high accuracy distance measurement. Therefore, it is necessary to choose between one-bit fast distance measurement and 10-bit AD conversion to fit the circumstances.

One-bit fast distance measurement can be used for applications including detection of the existence of some kind of object halfway through a given distance and detection of saturation of the light reception section 12 due, for example, to external interference light.

It should be noted that the configuration example of the light reception section 12 illustrated in Fig. 5 can be formed as a stacked semiconductor apparatus which will be described later with reference to Figs. 31 to 34. In that case, the components illustrated in Fig. 5 can be arranged in a distributed manner on a plurality of stacked substrates. For example, the pixel section 101 may be arranged on the uppermost substrate, and the other components may be arranged on underlying substrates.

Also, in the configuration example of the light reception section 12 illustrated in Fig. 5, an ADC (the column ADC 330) is provided for each column. However, an ADC may be provided for every several pixels and ultimately for each unit pixel 121. This provides more speedup for one-bit fast distance measurement and 10-bit high accuracy distance measurement.

A description will be given below of various uses in the case where the TOF sensor 10 performs one-bit fast distance measurement.

<First example of using one-bit fast distance measurement for detecting saturation>

In the case where one-bit fast distance measurement is used to detect saturation of the light reception section 12, the number of pixels whose digital code (e.g., "1" in the case where the voltage signal VSL is greater than the reference voltage and "0" in the case where the voltage signal VSL is smaller) output to the subsequent stage output from the light reception section 12 is "1" is counted. It is sufficient to determine that the light reception section 12 is saturated when the pixel count exceeds a given threshold.
Fig. 8 depicts timing charts in the case where one-bit fast distance measurement is used to detect saturation and exposure of the light reception section 12 is controlled on the basis of the detection result thereof.
It should be noted that Fig. 8A illustrates a change in external interference light that can cause saturation of the light reception section 12. Fig. 8B illustrates a case where one-bit fast distance measurement is not used to detect saturation, and "AD" in the figure refers to the performance of 10-bit AD conversion for 10-bit high accuracy distance measurement. Fig. 8C illustrates a case where one-bit fast distance measurement is used to detect saturation, and "AD" in the figure refers to the performance of 10-bit AD conversion for 10-bit high accuracy distance measurement, and "SATURATION DETECTION" in the figure refers to the performance of one-bit fast distance measurement, i.e., one-bit AD conversion.
In the case where one-bit fast distance measurement is not used to detect saturation, 10-bit AD conversion is performed as a HW (hardware) process, a distance measurement computation is performed by a SW (software) process on the basis of the result of the 10-bit AD conversion, and a frame-by-frame image (e.g., image each of whose pixels has a pixel value representing a distance) is generated by using the result thereof as illustrated in Fig. 8B. Then, exposure control is performed in the case where the saturation of the light reception section 12 is detected on the basis of the generated image. It should be noted that we assume, in the examples illustrated in Fig. 8, that the 10-bit AD conversion per frame requires approximately 3 [ms] including the charge accumulation time, and the SW process involving the distance measurement computation and the image generation requires approximately 30 [ms].
In the case of Fig. 8B, the presence or absence of saturation is detected after a SW process, which is then followed by exposure control. Therefore, in the case where saturation is present, a normal image (saturation-free image) cannot be acquired. That is, in the case where saturation is present, the result of 10-bit AD conversion is a 1024LSB full scale code. Therefore, in the SW process, it is determined whether or not the saturation is present on the basis of whether or not this output is equal to or greater than 1000LSB or more. Then, in the case where saturation is present due to the SW process, the exposure control for the next frame is set to an exposure time shorter than the exposure control for the current frame. Because the accumulation of the next frame is performed within this short exposure time, it is possible to avoid saturation. As described above, saturation is avoided in the next frame. However, saturation is present in the current frame.
In contrast, in the case where one-bit fast distance measurement is used to detect saturation, saturation detection is performed using one-bit fast distance measurement (one-bit AD conversion) as a HW process during a period in which 10-bit AD conversion is not performed as a HW process as illustrated in Fig. 8C, i.e., during a period in which a SW process is performed in the case of Fig. 8B, and exposure control is performed using the result of the saturation detection.
Saturation detection using one-bit fast distance measurement requires a shorter amount of time than saturation detection using a SW process as in the case of Fig. 8B and keeps down power consumption.
Therefore, in the case where one-bit fast distance measurement is used to detect saturation, it is possible to speedily control the exposure in the case of 10-bit high accuracy distance measurement to an optimal state without waiting for the result of the SW process, thus providing a normal (saturation-free) image.

<Second example of using one-bit fast distance measurement for detecting saturation>

Fig. 9 illustrates a timing chart in the case where one-bit fast distance measurement is used to detect saturation and light emission of the light emission section 11 is controlled on the basis of the detection result thereof. "AD" in the figure refers to the performance of 10-bit AD conversion for 10-bit high accuracy distance measurement, and "SATURATION DETECTION" in the figure refers to the performance of one-bit fast distance measurement, i.e., one-bit AD conversion.
In this case, as in Fig. 8C described above, saturation detection is performed using one-bit fast distance measurement (one-bit AD conversion) as a HW process during a period in which 10-bit AD conversion is not performed as a HW process, i.e., during a period in which a SW process is performed in the case of Fig. 8B, and light emission control is performed using the result of the saturation detection.
Saturation detection using one-bit fast distance measurement requires a shorter amount of time than saturation detection using a SW process as in the case of Fig. 8B and keeps down power consumption.
Therefore, in the case where one-bit fast distance measurement is used to detect saturation, it is possible to speedily control the light emission in the case of 10-bit high accuracy distance measurement to an optimal state without waiting for the result of the SW process, thus providing a normal (saturation- and insufficient-exposure-free) image.

<Coordinated operation between the TOF sensor 10 and the HDR (High Dynamic Range) TOF sensor>

A description will be given next of a case where one-bit fast distance measurement performed by the TOF sensor 10 is employed to achieve coordinated operation with an HDR TOF sensor. Here, the HDR TOF sensor can be considered other electronic equipment according to an aspect of the present disclosure.

Figs. 10 and 11 are diagrams for describing coordinated operation between the TOF sensor 10 and the HDR TOF sensor. It should be noted that Fig. 11A illustrates a change in external interference light that can cause saturation of the light reception section 12. Fig. 11B illustrates timings when saturation is detected through one-bit fast distance measurement by the TOF sensor 10 and timings when the HDR TOF sensor is controlled on the basis of the result of the saturation detection.

Here, the HDR TOF sensor refers to a sensor that can generate an image having a wider-than-normal dynamic range or calculate a distance by capturing an image with a certain short exposure time (e.g., 0.01 [ms]; hereinafter referred to as short accumulation), next capturing an image with a longer exposure time (e.g., 1 [ms]; hereinafter referred to as long accumulation), and then combining the image captured with short accumulation and the image captured with long accumulation.

As illustrated in Fig. 11B, when an HDR TOF sensor 600 captures an image with short accumulation, the TOF sensor 10 performs one-bit fast distance measurement to detect saturation at the same time and notifies the result of the saturation detection to the HDR TOF sensor 600. In the case where the HDR TOF sensor 600 is notified by the TOF sensor 10 that saturation has been detected, the HDR TOF sensor 600 halts image capture with long accumulation scheduled after the image capture with short accumulation. In this case, the image captured with short accumulation can be output speedily without waiting for the elapse of time required for image capture with long accumulation and combining of images.

It should be noted that in the case where the HDR TOF sensor 600 has equal functionality to the TOF sensor 10, the HDR TOF sensor 600 may use one-bit fast distance measurement to detect saturation alone and control its HDR functionality on the basis of the detection result thereof. That is, when capturing an image with short accumulation, the HDR TOF sensor 600 detects saturation in advance through one-bit fast distance measurement. In the case where saturation is detected, the HDR TOF sensor 600 halts image capture with long accumulation scheduled after the image capture with short accumulation. In this case, the image captured with short accumulation can be output speedily without waiting for the elapse of time required for image capture with long accumulation and combining of images.

<Coordinated operation between the TOF sensor 10 and the Lidar sensor>

A description will be given next of a case where one-bit fast distance measurement performed by the TOF sensor 10 is employed to achieve coordinated operation with a Lidar sensor. Here, the Lidar sensor can be considered other electronic equipment according to an aspect of the present disclosure.

A Lidar sensor refers to a sensor that measures the distance to a target by irradiating laser light, pulsed light, onto the target, and measuring scattered light of the laser light. The Lidar sensor can measure a distance with higher accuracy than the TOF sensor 10. It should be noted, however, that because the Lidar sensor scans in the direction where a target possibly exists with laser light, the Lidar sensor has the following drawback. That is, in the case where the Lidar sensor scans with the same view angle as the TOF sensor 10, the resolution of the image that can be acquired (e.g., image each of whose pixels has a pixel value representing a distance) is lower than that for the TOF sensor 10. As a result, the farther the target, the wider the laser light scanning interval.

For this reason, possible operation would be to compensate for this drawback by allowing the TOF sensor 10 and the Lidar sensor 700 to operate in coordinated fashion.

Figs. 12 and 13 are diagrams for describing coordinated operation between the TOF sensor 10 and the Lidar sensor 700.

As illustrated in Fig. 12, for example, the TOF sensor 10 and the Lidar sensor 700 are mounted to the same vehicle (e.g., automobile), and one-bit AD conversion is performed first by using the column ADCs 330 in the light reception section 12 of the TOF sensor 10, thus carrying out distance measurement in the entire view angle of the TOF sensor 10 fast and with low accuracy as illustrated by a dashed line in Fig. 13A. Substantially, a region is detected where some kind of object is present up to a given distance.

This allows the TOF sensor 10 to detect, of the entire view angle, a region where some kind of object is present (region in a human shape in the case of Fig. 13A) up to the given distance. The TOF sensor 10 notifies this detection result to the Lidar sensor 700.

After receiving a notice of the detection result from the TOF sensor 10, the Lidar sensor 700 sets, as a laser light scanning range, a relatively narrow region including the region where some kind of object is present (region in a human shape in the case of Fig. 13A) notified by the TOF sensor 10, thus measuring the distance to the target with high accuracy. In this case, the laser light scanning range of the Lidar sensor 700 is limited to a relatively narrow region. Therefore, the Lidar sensor 700 can, compared to the case where the entire view angle is set as the scanning range, keep down the spread of the scanning interval even if the target is far, thus allowing for output of a high resolution image (e.g., image each of whose pixels has a pixel value representing a distance).

<First coordinated operation between one-bit fast distance measurement and 10-bit high accuracy distance measurement in the TOF sensor 10>

A description will be given next of first coordinated operation between one-bit fast distance measurement and 10-bit high accuracy distance measurement in the TOF sensor 10.

As described above, the TOF sensor 10 is capable of distance measurement with low accuracy through one-bit fast distance measurement and distance measurement with high accuracy through 10-bit high accuracy distance measurement. Then, one-bit fast distance measurement can be performed faster and with lower power consumption than 10-bit high accuracy distance measurement. For this reason, the TOF sensor 10 is operated by taking advantage of such a characteristic in the first coordinated operation.

Figs. 14 and 15 are diagrams for describing the first coordinated operation between one-bit fast distance measurement and 10-bit high accuracy distance measurement in the TOF sensor 10.

As illustrated in Fig. 14, one-bit AD conversion is performed first by using the column ADCs 330 in the light reception section 12 of the TOF sensor 10, thus carrying out distance measurement in the entire view angle of the TOF sensor 10 as the detection view angle of the target, fast and with low accuracy as illustrated by a dashed line in Fig. 15A. Substantially, a region is detected where some kind of object is present up to a given distance. While one-bit AD conversion is performed, it is possible to keep down power consumption of the TOF sensor 10 as a whole.

In the case where a region can be detected where some kind of object is present up to a given distance, next, the TOF sensor 10 sets, as the detection view angle of the target, a relatively narrow region (depicted by a dashed line in Fig. 15A) including the region in question (region in a human shape in the case of Fig. 15A), thus measuring the distance to the target with high accuracy through 10-bit AD conversion. In this case, the target detection view angle is not limited, thus providing an image (e.g., image each of whose pixels has a pixel value representing a distance) more speedily than in the case where the entire image is used as a detection view angle.

<Second coordinated operation between one-bit fast distance measurement and 10-bit high accuracy distance measurement in the TOF sensor 10>

A description will be given next of second coordinated operation between one-bit fast distance measurement and 10-bit high accuracy distance measurement in the TOF sensor 10.

As described above, the TOF sensor 10 is capable of one-bit fast distance measurement and 10-bit high accuracy distance measurement. It should be noted, however, that if significant motion blur occurs due to movement of the target in the case of 10-bit high accuracy distance measurement, it is difficult to perform distance measurement with high accuracy. In contrast, in the case of one-bit fast distance measurement, distance measurement with low accuracy is affected to a lesser extent even if motion blur occurs as a result of the movement of the target. For this reason, the TOF sensor 10 is operated by taking advantage of such a characteristic in the second coordinated operation.

Figs. 16 and 17 are diagrams for describing the second coordinated operation between one-bit fast distance measurement and 10-bit high accuracy distance measurement in the TOF sensor 10.

As illustrated in Fig. 16, the TOF sensor 10 performs 10-bit high accuracy distance measurement first. Then, in the case where motion blur exceeds a given threshold due to the movement of the target as illustration in Fig. 17A, the TOF sensor 10 next switches from 10-bit high accuracy distance measurement over to one-bit fast distance measurement as illustrated in Fig. 17B.

Switching to one-bit fast distance measurement speedily provides an image relatively less affected by motion blur than in the case of 10-bit high accuracy distance measurement (e.g., image each of whose pixels has a pixel value representing whether or not an object is present up to a given distance).

<Third coordinated operation between one-bit fast distance measurement and 10-bit high accuracy distance measurement in the TOF sensor 10>

A description will be given next of third coordinated operation between one-bit fast distance measurement and 10-bit high accuracy distance measurement in the TOF sensor 10.

In the case of distance measurement to a target, and in the case where the TOF sensor 10 detects the target at a given medium/long distance by starting from a given low value of the light emission frequency Fmod of the light emission section 11 (light flickering frequency), it is possible to measure the distance to the target with more accuracy by increasing the light emission frequency Fmod to a high value in a step-by-step manner.

For this reason, in the case where the light emission frequency Fmod of the light emission section 11 is increased from a low value to a high value in a step-by-step manner, one-bit fast distance measurement is performed when the light emission frequency Fmod is low value, and 10-bit high accuracy distance measurement is performed when the light emission frequency Fmod reaches a somewhat high value. This contributes to a reduced total amount of time from the beginning of distance measurement where the light emission frequency Fmod is low value to when the light emission frequency Fmod reaches a high value that permits accurate distance measurement as compared to the case where 10-bit high accuracy distance measurement is performed at all times.

<Coordinated operation between the TOF sensor 10 and the Vision sensor>

A description will be given next of a case where one-bit fast distance measurement performed by the TOF sensor 10 is employed to achieve coordinated operation with a Vision sensor. Here, the Vision sensor can be considered other electronic equipment according to an aspect of the present disclosure.

Here, the Vision sensor refers to a sensor that can shoot a video at a frame rate extremely higher (e.g., 300 fps) than the frame rate of an ordinary video camera (approximately 30 fps).

Fig. 18 is a diagram for describing coordinated operation between the TOF sensor 10 and a Vision sensor 800.

As illustrated in Fig. 18, for example, the TOF sensor 10 and the Vision sensor 800 are mounted to the same vehicle (e.g., automobile), and the TOF sensor 10 is operated at 300 fps by performing one-bit AD conversion, and at the same time, the Vision sensor 800 is operated at 300 fps in synchronism with the TOF sensor 10, thus providing a video of an extremely high frame rate and an output image (e.g., image each of whose pixels has a pixel value representing whether or not an object is present up to a given distance) from the TOF sensor 10 that is synchronous with the video.

It should be noted that one-bit fast distance measurement may be performed by the TOF sensor 10 first and that in the case where a region is detected where some kind of object is present up to a given distance as a result of the one-bit fast distance measurement, the operation of the Vision sensor 800 may be started by using the detection of such a region as a trigger, as with coordinated operation with the Lidar sensor 700 described above.

Alternatively, conversely, the Vision sensor 800 may be operated first, and in the case where the existence of an object is detected in the video shot with the Vision sensor 800, one-bit fast distance measurement or 10-bit high accuracy distance measurement may be initiated by the TOF sensor 10 by using the detection of such an object as a trigger.

As described above, using a detection result of one of the TOF sensor 10 and the Vision sensor 800 as a trigger to start the operation of the other makes it possible to respond to a fast-moving object. Also, in this case, while the detection result of one of them is awaited, the power consumption of the other can be kept down.

<Interference that can occur in the TOF sensor and its countermeasure>

A description will be given next of interference that can occur in the TOF sensor and its countermeasure.

For example, in the case where a plurality of TOF sensors is mounted to a single vehicle, interference can occur in which a TOF sensor receives not only reflected light of irradiated light emitted by itself but also irradiated light emitted by other TOF sensors and their reflected light. In the case where interference occurs in the TOF sensors, the accuracy of distance measurement deteriorates. Therefore, it is necessary to apply an anti-interference countermeasure to the TOF sensors so as to maintain the distance measurement accuracy unchanged.

A description will be given here, once again, of timings of distance measurement performed by the TOF sensor to describe an anti-interference countermeasure.

Fig. 19 is a timing chart describing an example of distance measurement in the case where the TOF sensor finds the reflection time $\Delta t$ by using the second calculation method.

The TOF sensor treats the time period in which the distance L to the target is to be calculated as a frame and calculates, frame by frame, the distance L. In the example illustrated in Fig. 19, the frame length is, for example, 33 [ms].

A frame includes a plurality of sub-frames sub during which irradiated light is emitted.

In the example illustrated in Fig. 19, the length of a sib-frame (sub-frame length) is, for example, 0.2 [ms].

Further, in the example illustrated in Fig. 19, a frame includes four sub-frames sub, and these four sub-frames sub are arranged at a given constant interval sd from the head of the frame. The length from the head to the end of the four sub-frames sub is, for example, 1 [ms]. In the frame illustrated in Fig. 19, therefore, there are four sub-frames sub during a 1 [ms] time period from the head, and there are no sub-frames during the remaining 32 (= 33 - 1) [ms] time period.

In the frame, light reception with a 0 shift, light reception with a $\pi/2$ shift, light reception with a $\pi$ shift, and light reception with a $3\pi/2$ shift are conducted respectively in the four sub-frames sub.

In the sub-frame sub, assuming that it takes, for example, 100 [ns] for a single emission of irradiated light and light reception with a $\theta$ shift (e.g., time corresponding to a $2\pi$ phase), the time for emission of irradiated light and light reception with a $\theta$ shift is repeated a plurality of times such as 2000 times. Then, a sum of the amounts of charge of reflected light received a plurality of times such as 2000 times is used to calculate a phase difference $\varphi$ between irradiated light and reflected light.

Incidentally, if there is, around a TOF sensor, another TOF sensor, at least some of the sub-frames sub of the both TOF sensors overlap each other not a few times.

As described above, in the case where, in the frame, the four sub-frames sub are arranged at the given constant interval sd from the head of the frame, and if the sub-frame sub of a frame of the TOF sensor in question and the sub-frame sub of the other TOF sensor overlap each other, overlaps of the sub-frames sub will continue in the subsequent frames between the TOF sensor in question and the other TOF sensor.

During a period in which overlaps of the sub-frames sub occur, the TOF sensor in question develops interference due to which the TOF sensor in question receives not only irradiated light emitted by itself but also irradiated light emitted by the other TOF sensor.

Interference affects the amount of charge TapA (or Q1) during the first received light pulse period and the amount of charge TapB (or Q2) during the second received light pulse period, resulting in reduced distance measurement accuracy.

As described above, in the case where, in the frame, the four sub-frames sub are arranged at the given constant interval sd from the head of the frame, interference as described above cannot be eliminated, for example, until there is no longer other TOF sensor around the TOF sensor in question.

Fig. 20 is a timing chart describing an example of distance measurement in the case where the TOF sensor to which an anti-interference measure has been applied finds the reflection time Δt by using the second calculation method.

As described with reference to Fig. 19, in the case where, in each frame, the plurality of sub-frames sub is arranged at the given constant interval sd from the head of the frame, and if there is an overlap of the sub-frames sub with the other TOF sensor, overlaps of the sub-frames sub will continue in the subsequent frames between the TOF sensor in question and the other TOF sensor and the interference will continue to occur.

For this reason, the TOF sensor to which an anti-interference countermeasure has been applied controls the emission of irradiated light (and the reception of reflected light of the irradiated light) such that the timings of the head sub-frames sub are different between the first frame and the second frame that follows and that the interval sd between the sub-frames is constant.

In the case of the example illustrated in Fig. 20, the TOF sensor to which an anti-interference countermeasure has been applied controls the emission of irradiated light in the first frame such that the plurality of sub-frames sub is arranged at the given constant interval sd from the head of the frame as in the case illustrated in Fig. 19.

Then, the TOF sensor to which an anti-interference countermeasure has been applied controls the emission of irradiated light in the next frame such that the plurality of sub-frames sub is arranged at the given constant interval sd from a timing when a given amount of time elapses from the head of the frame.

The timing when the head sub-frame sub of the plurality of sub-frames sub in a frame starts will be hereinafter also referred to as a head timing.

The TOF sensor to which an anti-interference countermeasure has been applied controls the emission of irradiated light such that only the head timing varies while maintaining the interval sd between the sub-frames constant (fixed) between the first frame, a certain frame, and the second frame that follows the first frame.

As described above, it is possible to suppress interference by controlling the emission of irradiated light such that the head timing is different between the first frame and the second frame that follows the first frame and that the interval between the sub-frames is constant.

That is, in the example illustrated in Fig. 20, interference is present in the first frame of the TOF sensor to which an anti-interference countermeasure has been applied due to an overlap of the sub-frames sub with the other TOF sensor, as in the case illustrated in Fig. 19.

However, in the next frame, the head timing is different between the first frame and the second frame, thus preventing an overlap of the sub-frames sub with the other TOF sensor and ensuring freedom from interference.

It should be noted that the TOF sensor to which an anti-interference countermeasure has been applied can, for example, change the head timing in accordance with a predetermined pattern or randomly. Changing the head timing randomly rather than in accordance with a predetermined pattern ensures improved probability to suppress interference.

Here, from the viewpoint of ensuring improved probability to suppress interference, changing the start timing of the sub-frames (sub-frame position) randomly sub-frame by sub-frame ensures improved probability to suppress interference rather than changing the head timing randomly frame by frame.

However, in the case where the start timing of the sub-frames is changed randomly sub-frame by sub-frame, processing and circuitry for controlling the emission of irradiated light (and the reception of reflected light of the irradiated light) is more complicated than in the case where the head timing is changed randomly frame by frame.

In other words, in the case where the head timing is changed randomly frame by frame, processing and circuitry for controlling the emission of irradiated light is simple as compared to the case where the start timing of the sub-frames is changed randomly sub-frame by sub-frame, thus allowing to suppress interference with ease.

Further, in the case where the head timing is changed randomly frame by frame, power consumption can be suppressed as compared to the case where the start timing of the sub-frames is changed randomly sub-frame by sub-frame.

Next, Fig. 21 depicts diagrams describing examples of power consumption in the case where the head timing is changed randomly frame by frame (Fig. 21A) and in the case where the start timing is changed randomly sub-frame by sub-frame (Fig. 21B).

A method of controlling the head timing on the basis of a random number can be used as a method of changing (shifting) the head timing randomly frame by frame. Similarly, a method of controlling the start timing of the sub-frames on the basis of a random number can be used as a method of changing (shifting) the start timing of the sub-frames randomly sub-frame by sub-frame.

In the case where control based on a random number is performed as described above, a random number generation process is required to generate random numbers used for such control.

Fig. 21A illustrates an example of a state of a random number generation process in the case where the head timing is changed randomly frame by frame.

In the case where the head timing is changed randomly frame by frame, it is sufficient that random numbers used to control the head timing of a frame are acquired at least by the time that frame starts. Therefore, the random number generation process can be activated (Active) only for a given time period prior to the start of the frame and be left on standby (Standby) during the remaining time period.

In the example illustrated in Fig. 21, the power consumption with the random number generation process being active is 50 [mW], and the power consumption with the random number generation process on standby is 0.1 [mW].

Therefore, it is possible to keep down power consumption by activating the random number generation process only for a given time period prior to the start of the frame and leaving the random number generation process on standby during other time period.

Fig. 21B illustrates an example of a state of the random number generation process in the case where the start timing of the sub-frames is changed randomly sub-frame by sub-frame.

In the case where the start timing of the sub-frames is changed randomly sub-frame by sub-frame, random numbers used to control the start timing of the sub-frames are required as appropriate. For this reason, it is necessary to maintain the random number generation process active at all times.

It is clear, therefore, that, in the case illustrated in Fig. 21B, the power consumption is larger than in the case illustrated in Fig. 21A where the random number generation process can be activated only for a given time period prior to the start of the frame and be left on standby during the remaining time period.

<Second configuration example of the TOF sensor 10>

Fig. 22 is a block diagram illustrating a configuration example (second configuration example) of the TOF sensor 10 to which an anti-interference measure has been applied.

The second configuration example in question is an example in which a random number generation section 52 has been added to the first configuration example (configuration example to which no anti-interference measure has been applied) illustrated in Fig. 4. Other common components are denoted by the same reference signs, and the description thereof will be omitted as appropriate.

The random number generation section 52 generates random numbers, for example, by using a predetermined number as a seed of random numbers and supplies the random numbers to the control section 53.

The control section 53 in the second configuration example controls the emission of irradiated light by the light emission section 11 and the reception of reflected light by the pixels 31 of the light reception section 12.

In controlling the emission of irradiated light and the reception of reflected light, the control section 53 controls, frame by frame, the head timing when the head sub-frame sub of the plurality of sub-frames sub starts on the basis of the random numbers supplied from the random number generation section 52. This causes the head timing to change randomly frame by frame.

It should be noted that the control section 53 can control switching between activating the random number generation section 52 (the random number generation process thereof) and placing the random number generation section 52 on standby as illustrated in Fig. 21A.

<Second configuration example of the TOF sensor 10>

Fig. 23 is a block diagram illustrating a configuration example (third configuration example) of the TOF sensor 10 to which an anti-interference measure has been applied.

The third configuration example in question is an example in which a pixel noise detection section 61 has been added to the second configuration example illustrated in Fig. 22. Other common components are denoted by the same reference signs, and the description thereof will be omitted as appropriate.

The pixel noise detection section 61 detects, for example, the amount of charge of the pixels 41, OPB pixels, as pixel noise that occurs in the pixels 31 and 41 and supplies the detected amount of charge to the random number generation section 52.

It should be noted that the pixel noise detection section 61 can select the plurality of pixels 41 of the dummy pixel section 40 in a specific or arbitrary order and detect the amount of charge of the selected pixels 41 as pixel noise.

In the third configuration example in question, the random number generation section 52 generates random numbers by using the pixel noise, supplied from the pixel noise detection section 61, as a seed of random numbers.

The pixels 31 and 41 have a (nearly) random pixel noise characteristic. Therefore, the third configuration example in question that generates random numbers by using pixel noise having such a random characteristic as a seed and controls the head timing on the basis of such random numbers can suppress interference (likelihood for interference) more than the second configuration example illustrated in Fig. 22.

It should be noted that the characteristic of the pixels 31 (the accuracy thereof) is similar to that of the pixel noise of the pixel 31 and the pixel 41, which is random characteristic (characteristic of the pixels 31 = random characteristic).

Also, the TOF sensor 10 has an interference suppression characteristic that is inversely proportional to a random characteristic similar to that of the pixel noise characteristic of the pixel 31 and the pixel 41 (interference suppression characteristic = 1/random characteristic).

On the other hand, the TOF sensor 10 has distance measurement accuracy that is proportional to the product of the characteristic of the pixels 31 and the interference suppression characteristic.

As described above, the pixels 31 have a random characteristic, and the interference suppression characteristic is inversely proportional to a random characteristic. Therefore, the product of the characteristic of the pixels 31 (= random characteristic) and the interference suppression characteristic (= 1/random characteristic) is 1 and a constant.

This allows the TOF sensor 10 to maintain the distance measurement accuracy (nearly) constant in the case where random numbers are generated by using the pixel noise as a seed so as to control the head timing on the basis of such random numbers.

<Frequency hopping and phase change as anti-interference countermeasures>

The second and third configuration examples of the TOF sensor 10 described above have suppressed interference, frame by frame, by randomly changing the head timing when the head sub-frame sub of the plurality of sub-frames sub in a frame starts.

A fourth configuration example of the TOF sensor 10 described below suppresses interference by performing at least frequency hopping or phase change of the light emission frequency Fmod (light flickering frequency) of the light emission section 11.

The frequency hopping of the light emission frequency Fmod is a scheme of spread spectrum and refers to a process of quickly switching the light emission frequency Fmod in accordance with a given rule. Specifically, for example, the frequency hopping refers to a process of changing the light emission frequency Fmod (e.g., 60 [MHz]) prior to the frequency hopping to 59.999 [MHz], 59.992 [MHz], and so on in a step-by-step manner. Although the frequency hopping of the light emission frequency Fmod is effective in suppressing interference, complication of processing and increased power consumption are among disadvantages of the frequency hopping of the light emission frequency Fmod.

The phase change of the light emission frequency Fmod refers to a process of shifting, by a $\pi$ [rad], a binary (e.g., 101010 where 0 represents an unlit state and 1 represents a lit state) phase that changes in synchronism with the light emission frequency Fmod and inverting the phase to 010101. The phase change is performed, for example, randomly sub-frame sub by sub-frame sub.

It should be noted that, as for details of the phase change of the light emission frequency Fmod, the method described in R.Z.Whyte, A.D.Payne, A.A.Dorrington, and M.J.Cree, "Multiple range imaging camera operation with minimal performance impact," Proc.SPIE-IS&T Electronic Imaging, edited by D.Fofi, K.S.Niel, SPIE vol.7538, pp75380I, (2010) can be applied.

Changing the phase of the light emission frequency Fmod is also effective in suppressing interference. Also, the phase of the light emission frequency Fmod can be changed without increasing power consumption as in the case of frequency hopping. It should be noted, however, that reduced noise suppression effect can be cited among disadvantages in the case where there is an approximate match between the light emission frequency Fmod and an disturbance wave (the light emission frequency Fmod of other TOF sensor).

For this reason, the fourth configuration example of the TOF sensor 10 selectively uses frequency hopping and phase change to fit the use case in consideration of the characteristics of frequency hopping and phase change.

For example, in a mobile sector that requires power savings, phase change is performed preferentially to avoid frequency hopping to the extent possible.

Also, in a vehicle-mounted equipment sector that requires high accuracy distance measurement rather than power savings, frequency hopping and phase change are performed, thus suppressing interference more effectively.

Further, for example, in an environment abundant with disturbance waves, frequency hopping is performed repeatedly to find the optimal light emission frequency Fmod first, followed by phase change, thus reliably suppressing interference with disturbance waves.

<Fourth configuration example of the TOF sensor 10>

Fig. 24 is a block diagram illustrating the fourth configuration example of the TOF sensor 10.

The fourth configuration example in question is an example in which an interference suppression section 511 has been added to the first configuration example illustrated in Fig. 4. It should be noted that because components common to those of the first configuration example are denoted by the same reference signs, the description thereof will be omitted as appropriate.

The control section 53 in the fourth configuration example includes a frequency hopping control section 501, a phase change control section 502, and an Fmod setting section 503.

The frequency hopping control section 501 causes the Fmod setting section 503 to perform frequency hopping of the light emission frequency Fmod under control of the interference suppression section 511. The phase change control section 502 causes the Fmod setting section 503 to change the phase of the light emission frequency Fmod under control of the interference suppression section 511.

The Fmod setting section 503 performs frequency hopping of the light emission frequency Fmod under control of the frequency hopping control section 501. The Fmod setting section 503 changes the phase of the light emission frequency Fmod under control of the phase change control section 502.

The interference suppression section 511 includes a distance detection section 521, a difference detection section 522, a determination section 523, and a setting section 524.

The distance detection section 521 calculates, frame by frame, the distance L to the target on the basis of the pixel signal supplied from the light reception section 12 (same pixel signal as output to the distance calculation section 51) as does the distance calculation section 51 and outputs the distance L to the difference detection section 522.

It should be noted that the distance L to the target calculated by the distance calculation section 51 may be supplied to the difference detection section 522 by omitting the distance detection section 521.

The difference detection section 522 detects a difference representing the extent of variation of the distance L corresponding to each frame of a given number of frames (e.g., several 100 frames) calculated under the same state of the light emission frequency (light emission frequency Fmod and whether or not phase change is performed) and outputs the difference to the determination section 523.

The above difference is expressed in percentage or other forms, for example, by calculating an average value corresponding to the distance L of each frame of a given number of frames for use as a reference value and calculating the average value of the differences between the reference value and the distance L of each frame.

In the case where the difference is small, this means that the variation of the distance L calculated under the same state of the light emission frequency is small and that distance measurement is being performed in a stable manner. Therefore, one can infer that no interference is taking place or interference is suppressed.

Conversely, in the case where the difference is large, this means that the variation of the distance L calculated under the same state of the light emission frequency is large and that distance measurement is not being performed in a stable manner. Therefore, one can infer that interference is taking place.

Fig. 25 illustrates examples of states of the light emission frequency. State "a" refers to a state in which neither frequency hopping nor phase change are applied (not performed). State "b" refers to a state in which frequency hopping is not applied but phase change is applied (performed). State "c" refers to a state in which frequency hopping is applied in one step but phase change is not applied. State "d" refers to a state in which frequency hopping is applied in one step and phase change is applied. State "e" refers to a state in which frequency hopping is applied in two steps but phase change is not applied. State "f" refers to a state in which frequency hopping is applied in two steps and phase change is applied.

It should be noted that the values of the light emission frequency Fmod recited in Fig. 25 are merely examples and that the light emission frequency Fmod is not limited thereto.

Referring back to Fig. 24, the determination section 523 compares the differences detected under the different states of the light emission frequency. For example, the determination section 523 compares the differences detected in the state "a" and the state "b" or the differences detected in the state "c" and the state "e" in Fig. 25.

Then, the determination section 523 outputs a comparison result to the setting section 524. The setting section 524 controls the frequency hopping control section 501 and the phase change control section 502 on the basis of the determination result input from the determination section 523.

<Operation performed by the fourth configuration example of the TOF sensor 10>

A description will be given next of the operation performed by the fourth configuration example of the TOF sensor 10.

Fig. 26 is a flowchart describing a first light emission frequency Fmod change process according to the fourth configuration example of the TOF sensor 10.

The first light emission frequency Fmod change process assumes use cases in the mobile and other sectors that require power savings.

The first light emission frequency Fmod change process is initiated, for example, in the case where interference is suspected.

In step S11, the difference detection section 522 of the interference suppression section 511 detects a difference representing the extent of variation of the distance L corresponding to each frame of a given number of frames calculated under the state in which the current light emission frequency Fmod remains unchanged and phase change is not applied (e.g., state "a" in Fig. 25) and outputs the difference to the determination section 523.

It should be noted that we assume that the control section 53 adjusts the state of the light emission frequency properly under control of the setting section 524 to ensure that the interference suppression section 511 can acquire a pixel signal for calculating the distance L corresponding to each frame of a given number of frames.

In step S12, the difference detection section 522 detects a difference representing the extent of variation of the distance L corresponding to each frame of a given number of frames calculated under the state in which the light emission frequency Fmod remains unchanged and phase change is applied (e.g., state "b" in Fig. 25) and outputs the difference to the determination section 523.

In step S13, the determination section 523 determines whether or not there is any effect of applying phase change on the basis of the difference calculated under the state in which phase change is not applied and the difference calculated under the state in which phase change is applied.

Specifically, for example, in the case where the difference calculated under the state in which phase change is not applied is equal to or larger than a first threshold for determining whether or not interference is present and the difference calculated under the state in which phase change is applied is equal to or smaller than a second threshold smaller than the first threshold, one can infer that a transition has taken place from a state in which interference is present to a state in which interference is suppressed. Therefore, it is determined that applying phase change has an effect. In this case, the process proceeds to step S14. In step S14, the setting section 524 controls the phase change control section 502 of the control section 53 to maintain the light emission frequency Fmod unchanged and apply phase change.

Also, for example, in the case where the difference calculated under the state in which phase change is not applied is equal to or larger than the first threshold and the difference calculated under the state in which phase change is applied is larger than the second threshold smaller than the first threshold, one can infer that a state in which interference is present continues. Therefore, it is determined that applying phase change has no effect. In this case, the process proceeds to step S15. In step S15, the setting section 524 controls the frequency hopping control section 501 of the control section 53 in such a manner as to maintain the light emission frequency Fmod unchanged, not to apply phase change, and to perform frequency hopping.

The first light emission frequency Fmod change process described above allows to suppress interference that is taking place and maintain the distance measurement accuracy unchanged. Also, phase change is performed preferentially to avoid frequency hopping to the extent possible, thus suppressing increase in power consumption caused by performing frequency hopping.

Next, Fig. 27 is a flowchart describing a second light emission frequency Fmod change process according to the fourth configuration example of the TOF sensor 10.

The second light emission frequency Fmod change process assumes use cases in the vehicle-mounted equipment and other sectors that require high accuracy distance measurement rather than power savings.

The second light emission frequency Fmod change process is initiated, for example, in the case where interference is suspected.

In step S21, the difference detection section 522 of the interference suppression section 511 detects a difference representing the extent of variation of the distance L corresponding to each frame of a given number of frames calculated under the state in which the current light emission frequency Fmod prior to frequency hopping remains unchanged and phase change is not applied (e.g., state "a" in Fig. 25) and outputs the difference to the determination section 523.

It should be noted that we assume that the control section 53 adjusts the state of the light emission frequency properly under control of the setting section 524 to ensure that the interference suppression section 511 can acquire a pixel signal for calculating the distance L corresponding to each frame of a given number of frames.

In step S22, the difference detection section 522 performs frequency hopping from the current light emission frequency Fmod, detects a difference representing the extent of variation of the distance L corresponding to each frame of a given number of frames calculated under the state in which phase change is not applied (e.g., state "c" in Fig. 25), and outputs the difference to the determination section 523.

In step S23, the determination section 523 compares the difference calculated in step S21 and the difference calculated in step S22 and notifies the smaller of the two differences to the setting section 524. The setting section 524 controls the frequency hopping control section 501 of the control section 53 in accordance with the notice from the determination section 523. That is, in the case where the difference calculated in step S21 is smaller, the setting section 524 controls the frequency hopping control section 501 not to perform frequency hopping. In the case where the difference calculated in step S22 is smaller, the setting section 524 controls the frequency hopping control section 501 to perform frequency hopping.

Next, in step S24, the difference detection section 522 of the interference suppression section 511 detects a difference representing the extent of variation of the distance L corresponding to each frame of a given number of frames calculated under the state in which the light emission frequency Fmod set in step S23 remains unchanged and phase change is not applied (e.g., state "a" or "c" in Fig. 25) and outputs the difference to the determination section 523. It should be noted that the process in step S24 is similar to the process in step S21 or the process in step S22 that has already been performed. Therefore, the result of one of the two processes may be diverted to correspond to the determination result of step S23.

In step S25, the difference detection section 522 of the interference suppression section 511 detects a difference representing the extent of variation of the distance L corresponding to each frame of a given number of frames calculated under the state in which the light emission frequency Fmod set in step S23 remains unchanged and phase change is applied (e.g., state "b" or "d" in Fig. 25) and outputs the difference to the determination section 523.

In step S26, the determination section 523 compares the difference calculated in step S24 (phase change not applied) and the difference calculated in step S25 (phase change applied), determines which is smaller, and notifies the determination result to the setting section 524. The setting section 524 controls the phase change control section 502 of the control section 53 on the basis of the determination result of the determination section 523. That is, in the case where the difference calculated in step S24 is smaller, the setting section 524 controls the phase change control section 502 not to apply phase change. In the case where the difference calculated in step S25 is smaller, the setting section 524 controls the phase change control section 502 to apply phase change.

The second light emission frequency Fmod change process described above allows for frequency hopping and phase change to be used in combination to suit the circumstances, thus suppressing interference to a greater extent and maintaining the distance measurement accuracy unchanged.

Next, Fig. 28 is a flowchart describing a third light emission frequency Fmod change process according to the fourth configuration example of the TOF sensor 10.

The third light emission frequency Fmod change process assumes, for example, use cases in an environment abundant with disturbance waves. Steps S31 to S33 of the third light emission frequency Fmod change process are similar to steps S21 to S23 of the second light emission frequency Fmod change process illustrated in Fig. 27. Therefore, the description thereof will be omitted.

In step S34, the determination section 523 determines, from the result of the process in immediately previous step S33, whether or not a desired accuracy has been achieved. Here, in the case where the determination section 523 determines that a desired accuracy has not been achieved, the process returns to step S32, and steps S32 and S34 are repeated. That is, frequency hopping is repeated. In the case where frequency hopping is repeated, the light emission frequency Fmod moves gradually away from the frequency of the disturbance wave, thus suppressing interference to a greater extent. Thereafter, in the case where it is determined in step S34 that a desired accuracy has been achieved, the process proceeds to step S35. It should be noted that steps S35 to S37 are similar to steps S24 to S26 of the second light emission frequency Fmod change process illustrated in Fig. 27. Therefore, the description thereof will be omitted.

The third light emission frequency Fmod change process described above allows for frequency hopping to be repeated until a desired accuracy is achieved and further allows for phase change to be used in combination with frequency hopping, thus suppressing interference to a greater extent and maintaining the distance measurement accuracy unchanged even in an environment abundant with disturbance waves.

<Fifth configuration example of the TOF sensor 10>

Fig. 29 is a block diagram illustrating a fifth configuration example of the TOF sensor 10.

The fifth configuration example in question is an example in which the interference suppression section 511, provided outside the TOF sensor 10 in the fourth configuration example illustrated in Fig. 24, is provided inside the TOF sensor 10 and in which the distance detection section 521 has been removed from the interference suppression section 511. It should be noted that because components common to those of the fourth configuration example are denoted by the same reference signs, the description thereof will be omitted as appropriate.

That is, the interference suppression section 511 of the fifth configuration example includes the difference detection section 522, the determination section 523, and the setting section 524.

The difference detection section 522 of the fifth configuration example detects a difference representing the extent of variation of a given value input from the light reception section 12 to correspond to each frame of a given number of frames (e.g., several 100 frames) under the same state of the light emission frequency and outputs the difference to the determination section 523.

That is, the difference detected by the difference detection section 522 is used to determine whether or not interference is present and severity of interference. Therefore, the difference need not necessarily represent the extent of variation of the distance L. Hence, the value supplied from the light reception section 12 to the difference detection section 522 in the fifth configuration example may be any value as long as it corresponds to each frame. For example, an amount of charge generated by a pixel, a pre-AD-conversion pixel signal corresponding to the amount of charge, a post-AD-conversion pixel signal corresponding to the amount of charge, the amount of charge TapA - the amount of charge TapB, or other values may be used.

The difference detected by the difference detection section 522 in the fifth configuration example is also expressed in percentage or other forms, for example, by calculating an average value corresponding to the distance L of each frame of a given number of frames for use as a reference value and calculating the average value of the differences between the reference value and the distance L of each frame.

In the case where the difference is small, this means that the variation of the given value acquired under the same state of the light emission frequency is small and that distance measurement is being performed in a stable manner. Therefore, one can infer that no interference is taking place or interference is suppressed.

Conversely, in the case where the difference is large, this means that the variation of the given value acquired under the same state of the light emission frequency is large and that distance measurement is not being performed in a stable manner. Therefore, one can infer that interference is taking place.

The fifth configuration example of the TOF sensor 10 provides a similar effect to the fourth configuration example described above.

<Sixth configuration example of the TOF sensor 10>

Fig. 30 is a block diagram illustrating a sixth configuration example of the TOF sensor 10.

The sixth configuration example in question is an example in which an interference suppression section 551 has been added to the first configuration example illustrated in Fig. 4. It should be noted that because components common to those of the first configuration example are denoted by the same reference signs, the description thereof will be omitted as appropriate.

The control section 53 in the sixth configuration example includes the frequency hopping control section 501, the phase change control section 502, and the Fmod setting section 503. The frequency hopping control section 501, the phase change control section 502, and the Fmod setting section 503 are similar to those in the fourth configuration example illustrated in Fig. 24. Therefore, the description thereof will be omitted.

The interference suppression section 551 includes a communication section 552 and a setting section 553.

The communication section 552 and the communication section 552 of other TOF sensor existing in the surrounding area and having a similar configuration communicate their states of the light emission frequency with each other, and the communication section 552 supplies the state of the light emission frequency of the other TOF sensor to the setting section 553.

The setting section 553 controls the frequency hopping control section 501 and the phase change control section 502 on the basis of the state of the light emission frequency of the other TOF sensor supplied from the communication section 552 in such a manner as not to produce any interference.

The sixth configuration example of the TOF sensor 10 changes the state of the light emission frequency in such a manner as not to produce any interference on the basis of the state of the light emission frequency of other TOF sensor existing in the surrounding area, reliably suppressing interference with the other TOF sensor existing in the surrounding area. This makes it possible to maintain the distance measurement accuracy unchanged.

It should be noted that the first to sixth configuration examples of the TOF sensor 10 described above can be used in combination as appropriate.

<Configuration example of the stacked semiconductor apparatus to which the technology according to the present disclosure is applicable>

Figs. 31 depicts diagrams illustrating an overview of configuration examples of a solid-state imaging apparatus as an example of a stacked semiconductor apparatus to which the technology according to the present disclosure is applicable.

Fig. 31A illustrates a schematic configuration example of a non-stacked solid-state imaging apparatus. A solid-state imaging apparatus 23010 has a die (semiconductor substrate) 23011 as illustrated in Fig. 31A. A pixel region 23012, a control circuit 23013, and a logic circuit 23014 are mounted on the die 23011. The pixel region 23012 includes pixels that are arranged in an array. The control circuit 23013 drives the pixels and performs other control tasks. The logic circuit 23014 is used to process signals.

Figs. 31B and 31C illustrate schematic configuration examples of a stacked semiconductor solid-state imaging apparatus. A solid-state imaging apparatus 23020 includes two dies, a sensor die 23021 and a logic die 23024, that are stacked one on top of the other and are electrically connected as illustrated in Figs. 31B and 31C, thus allowing the two dies to be configured as a single semiconductor chip.

In Fig. 31B, the pixel region 23012 and the control circuit 23013 are mounted on the sensor die 23021, and the logic circuit 23014 including a signal processing circuit for handling signal processing is mounted on the logic die 23024.

In Fig. 31C, the pixel region 23012 is mounted on the sensor die 23021, and the control circuit 23013 and the logic circuit 23014 are mounted on the logic die 23024.

Fig. 32 is a sectional view illustrating a first configuration example of a stacked solid-state imaging apparatus 23020.

PDs (photodiodes), FDs (floating diffusion), Trs (MOS FETs) included in the pixels of the pixel region 23012, Trs which will be the control circuit 23013, and other components are formed on the sensor die 23021. Further, an interconnect layer 23101 having a plurality of layers, and three layers of interconnects 23110 in the present example, is formed on the sensor die 23021. It should be noted that the control circuit 23013 (Tr which will be the control circuit 23013) can be formed on the logic die 23024 rather than on the sensor die 23021.

Trs included in the logic circuit 23014 are formed on the logic die 23024. Further, an interconnect layer 23161 having a plurality of layers, and three layers of interconnects 23170 in the present example, is formed on the logic die 23024. Also, a connection hole 23171 is formed on the logic die 23024. An insulating film 23172 is formed on an inner wall surface of the connection hole 23171, and a connection conductor 23173 to be connected to the interconnects 23170 and other components is embedded in the connection hole 23171.

The sensor die 23021 and the logic die 23024 are attached such that the interconnect layers 23101 and 23161 of the two dies face each other, thus forming the stacked solid-state imaging apparatus 23020 having the sensor die 23021 and the logic die 23024 stacked one on top of the other. A film 23191 such as protective film is formed on the surfaces of the sensor die 23021 and the logic die 23024 that are attached to each other.

A connection hole 23111 is formed in the sensor die 23021. The connection hole 23111 reaches from the side of a rear surface of the sensor die 23021 (side on which light is incident on the PDs) (upper side) through the sensor die 23021 to the interconnect 23170 in the uppermost layer of the logic die 23024. Further, a connection hole 23121 is formed in proximity to the connection hole 23111 in the sensor die 23021. The connection hole 23121 reaches from the side of the rear surface of the sensor die 23021 to the first layer of the interconnects 23110. An insulating film 23112 is formed on an inner wall surface of the connection hole 23111, and an insulating film 23122 is formed on an inner wall surface of the connection hole 23121. Then, connection conductors 23113 and 23123 are embedded in the connection holes 23111 and 23121, respectively. The connection conductor 23113 and the connection conductor 23123 are electrically connected on the rear surface side of the sensor die 23021. As a result, the sensor die 23021 and the logic die 23024 are electrically connected via the interconnect layer 23101, the connection hole 23121, the connection hole 23111, and the interconnect layer 23161.

Fig. 33 is a sectional view illustrating a second configuration example of the stacked solid-state imaging apparatus 23020.

In the second configuration example of the stacked solid-state imaging apparatus 23020, the sensor die 23021 (interconnect layer 23101 thereof (interconnect 23110 thereof)) and the logic die 23024 (interconnect layer 23161 thereof (interconnect 23170 thereof)) are electrically connected by a connection hole 23211 formed in the sensor die 23021.

That is, in Fig. 33, the connection hole 23211 is formed in such a manner that it reaches from the rear surface side of the sensor die 23021 through the sensor die 23021 to the interconnect 23170 in the uppermost layer of the logic die 23024 and to the interconnect 23110 in the uppermost layer of the sensor die 23021. An insulating film 23212 is formed on an inner wall surface of the connection hole 23211, and a connection conductor 23213 is embedded in the connection hole 23211. Although, in Fig. 32 described above, the sensor die 23021 and the logic die 23024 are electrically connected by the two connection holes 23111 and 23121, the sensor die 23021 and the logic die 23024 are electrically connected by the single connection hole 23211 in Fig. 33.

Fig. 34 is a sectional view illustrating a third configuration example of the stacked solid-state imaging apparatus 23020.

The solid-state imaging apparatus 23020 illustrated in Fig. 34 differs from the case illustrated in Fig. 32 in which the film 23191 such as protective film is formed on the surfaces of the sensor die 23021 and the logic die 23024 that are attached to each other in that the film 23191 such as protective film is not formed on the surfaces of the sensor die 23021 and the logic die 23024 that are attached to each other.

The solid-state imaging apparatus 23020 illustrated in Fig. 34 is formed by laying the sensor die 23021 and the logic die 23024 one on top of the other such that the interconnects 23110 and 23170 come into direct contact with each other and directly bonding the interconnects 23110 and 23170 by heating the interconnects while applying a given load.

Fig. 35 is a sectional view illustrating another configuration example of a stacked solid-state imaging apparatus to which the technology according to the present disclosure is applicable.

In Fig. 35, a solid-state imaging apparatus 23401 has a three-layer stacked structure in which a sensor die 23411, a logic die 23412, and a memory die 23413 are stacked one on top of the other.

The memory die 23413 includes a memory circuit for storing, for example, data temporarily required for signal processing handled by the logic die 23412.

Although, in Fig. 35, the logic die 23412 and the memory die 23413 are stacked in this order under the sensor die 23411, the logic die 23412 and the memory die 23413 can be stacked in the opposite order, i.e., the memory die 23413 can be stacked first followed by the logic die 23412 under the sensor die 23411.

It should be noted that a PD which will be a photoelectric conversion section of a pixel and a source/drain region of pixel Trs are formed on the sensor die 23411 in Fig. 35.

A gate electrode is formed via a gate insulating film around the PD. A pixel Tr 23421 and a pixel Tr 23422 are formed by a gate electrode and a pair of source/drain regions.

The pixel Tr 23421 adjacent to the PD is a transfer Tr, and one of the pair of source/drain regions included in the pixel Tr 23421 is the FD.

Also, an interlayer insulating film is formed in the sensor die 23411, and a connection hole is formed in the interlayer insulating film. Connection conductors 23431 connected to the pixel Tr 23421 and the pixel Tr 23422 are formed in the connection hole.

Further, an interconnect layer 23433 is formed in the sensor die 23411. The interconnect layer 23433 includes a plurality of interconnects 23432 connected to the respective connection conductors 23431.

Also, an aluminum pad 23434 which will be an electrode for external connection is formed in the lowermost layer of the interconnect layer 23433 of the sensor die 23411. That is, in the sensor die 23411, the aluminum pad 23434 is formed at a position closer to a bonding surface 23440 with the logic die 23412 than the interconnects 23432. The aluminum pad 23434 is used as one end of the interconnect related to input and output of signals from and to external equipment.

Further, a contact 23441 is formed in the sensor die 23411. The contact 23441 is used for electrical connection with the logic die 23412. The contact 23441 is connected not only to a contact 23451 of the logic die 23412 but also to an aluminum pad 23442 of the sensor die 23411.

Then, a pad hole 23443 is formed in such a manner as to reach from the rear surface side (upper side) of the sensor die 23411 to the aluminum pad 23442.

The technology according to the present disclosure allows for formation of the stacked semiconductor apparatuses as described above.

<Application example to a mobile body>

The technology according to the present disclosure (present disclosure) is applicable to a variety of products. For example, the technology according to the present disclosure may be realized as an apparatus mounted to any one of different types of moving bodies including automobile, electric vehicle, hybrid electric vehicle, two-wheeled motor vehicle, bicycle, personal mobility, airplane, drone, ship, and robot.

FIG. 36 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 36, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automatic driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 36, an audio speaker 12061, a display section 12062, and an instrument panel 12063 are illustrated as the output device. The display section 12062 may, for example, include at least one of an on-board display and a head-up display.

FIG. 37 is a diagram depicting an example of the installation position of the imaging section 12031.

In FIG. 37, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 37 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging

EP 3 591 437 B1

elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automatic driving that makes the vehicle travel autonomously without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

A description has been given above of an example of a vehicle control system to which the technology according to the present disclosure is applicable. The technology according to the present disclosure is applicable, of the components described above, for example, to the imaging section 12031 and other sections.

[Reference Signs List]

10 TOF sensor, 11 Light emission section, 12 Light reception section, 30 Effective pixel section, 31 Pixel, 40 Dummy pixel section, 41 Pixel, 51 Distance calculation section, 52 Random number generation section, 53 Control section, 61 Pixel noise detection section, 101 Pixel section, 102 Column ADC, 103 Horizontal transfer circuit, 105 Vertical scanning circuit, 122 Vertical signal line, 310 DAC, 320 Counter control section, 330 Column ADC, 331 Comparator, 332 Counter, 501 Frequency hopping control section, 502 Phase change control section, 503 Fmod setting section, 511 Interference suppression section, 521 Distance detection section, 522 Difference detection section, 523 Determination section, 524 Setting section, 551 Interference suppression section, 552 Communication section, 553 Setting section, 700 Lidar sensor, 800 Vision sensor

**Claims**

1. A distance measurement apparatus (10) comprising:

a light emission section (11) adapted to emit irradiated light;
a light reception section (12) including a plurality of pixels (31, 41) and adapted to receive reflected light of the irradiated light reflected from a target;
a calculation section (51) adapted to calculate a distance to the target on a basis of time it takes from emission of the irradiated light to reception of the reflected light, and
a control section (53) adapted to control the emission of the irradiated light by the light emission section (11) and the reception of the reflected light by the light reception section (12), wherein

the light reception section (12) includes a plurality of AD conversion sections (330-1,...,330-N) for Analog-Digital, AD, conversion of pixel signals read out from the pixels, wherein the AD conversion sections switch between a first AD conversion performed with an accuracy of a first bit count and a second AD conversion performed with an accuracy of a second bit count that is larger than the first bit count,

the light reception section (12) includes a Digital Analog Converter (310) which includes a first voltage generator (312), a second voltage generator (311) and a DAC switch (313) to switch between the first voltage generator (312) and the second voltage generator (311), and

the light reception section (12) further includes a counter control section (320) comprising a first bit count controller (322), a second bit count controller (321), and a counter control switch (323) to switch between the first bit count controller (322) and the second bit count controller (321);

wherein each AD conversion section (330-1; ... ;330-N) comprises a comparator (331-1; ... ;331-N) and a counter (332-1; ... ;332-N), and

wherein the comparator (331-1; ... ;331-N) of each AD conversion section (330-1; ... ;330-N) is connected to a signal line of a respective pixel (31; 41) and to the DAC switch (313) for AD conversion of respective pixel (31; 41) signals (Vsl) read out from the respective pixels (31; 41),

wherein when the AD conversion sections (330-1,...,330-N) perform the first AD conversion with the accuracy of the first bit count:

i) the DAC switch (313) is connected to a side of the first voltage generator (312),
ii) the counter control switch (323) is connected to a side of the first bit count controller and
iii) a control signal is supplied from the first bit count controller (322) to the counters (332-1; ... ;332-N) of the respective AD conversion sections (330-1; ... ;330-N) instructing the AD conversion sections (330-1,...,330-N) to perform the first AD conversion with the accuracy of the first bit count;

wherein when the AD conversion sections (330-1,...,330-N) perform the second AD conversion with the accuracy of the second bit count:

i) the DAC switch (313) is connected to a side of the second voltage generator (311),
ii) the counter control switch (323) is connected to a side of the second bit count controller (321) and
iii) a control signal is supplied from the second bit count controller (321) to the counters (332-1; ... ;332-N) of the respective AD conversion sections (330-1; ... ;330-N) instructing the AD conversion sections (330-1,...,330-N) to perform the second AD conversion with the accuracy of the second bit count, and

wherein the first bit count is a one-bit accuracy, and
wherein the first voltage generator (312) generates a constant voltage, and the second voltage generator (311) generates a voltage that varies in a ramp manner; and
wherein the calculation section (51) measures the distance to the target by using a result of the first or second AD conversion by the AD conversion sections.

2. The distance measurement apparatus (10) of claim 1, wherein
the calculation section (51) performs fast distance measurement by using the result of the first AD conversion by the AD conversion sections (330-1,...,330-N) before performing high accuracy distance measurement by using the result of the second AD conversion by the AD conversion sections (330-1,...,330-N).

3. The distance measurement apparatus (10) of claim 2, wherein
in a case where saturation is detected from the result of the fast distance measurement performed prior to the high accuracy distance measurement:
the control section (53) controls exposure of the light reception section corresponding to the high accuracy distance measurement to be performed immediately thereafter.

4. The distance measurement apparatus (10) of claim 2, wherein in a case where saturation is detected from the result of the fast distance measurement performed prior to the high accuracy distance measurement:
the control section (53) controls light emission of the light emission section (11) corresponding to the high accuracy distance measurement to be performed immediately thereafter.

5. The distance measurement apparatus (10) of claim 2, wherein in a case where saturation is detected from the result of the fast distance measurement performed prior to the high accuracy distance measurement:
the control section (53) halts the high accuracy distance measurement scheduled to be performed immediately thereafter.

6. The distance measurement apparatus (10) of claim 2, wherein
the calculation section (51) restricts a detection view angle of the high accuracy distance measurement to be performed immediately thereafter on a basis of the result of the fast distance measurement performed prior to the high accuracy distance measurement.

7. The distance measurement apparatus (10) of claim 1, wherein
the calculation section (51) performs high accuracy distance measurement by using the result of the second AD conversion by the AD conversion sections (330-1,...,330-N) before performing fast distance measurement by using the result of the first AD conversion by the AD conversion sections (330-1,...,330-N).

8. The distance measurement apparatus (10) of claim 7, wherein

in a case where motion blur is detected from the result of the high accuracy distance measurement , the AD conversion sections (330-1,...,330-N) switch from the second AD conversion over to the first AD conversion, and the calculation section (51) switches from the high accuracy distance measurement over to the fast distance measurement.

9. The distance measurement apparatus (10) of claim 1, wherein
the result of a fast distance measurement is used as a trigger to start operation of other electronic equipment (600; 700; 800).

10. The distance measurement apparatus (10) of claim 1, wherein
a fast distance measurement is performed in synchronism with other electronic equipment (600; 700; 800).

11. A distance measurement system comprising:

a distance measurement apparatus according to claim 1; and
other electronic equipment (600; 700; 800),
wherein the other electronic equipment (600; 700; 800) starting operation using a result of the fast distance measurement by the distance measurement apparatus as a trigger.

12. A distance measurement method of a distance measurement apparatus (10), the distance measurement apparatus including

a light emission section (11) adapted to emit irradiated light,
a light reception section (12) including a plurality of pixels (31; 41) and adapted to receive reflected light of the irradiated light reflected from a target,
a calculation section (51) adapted to calculate a distance to the target on a basis of time it takes from emission of the irradiated light to reception of the reflected light, and
a control section adapted (53) to control the emission of the irradiated light by the light emission section (11) and the reception of the reflected light by the light reception section (12),
the light reception section (12) including a plurality of AD conversion sections (330-1,...,330-N) for Analog-Digital, AD, conversion of pixel signals read out from the pixels, wherein the AD conversion sections switch between a first AD conversion performed with an accuracy of a first bit count and a second AD conversion performed with an accuracy of a second bit count that is larger than the first bit count,
the light reception section (12) including a Digital Analog Converter (310) which includes a first voltage generator (312), a second voltage generator (311) and a DAC switch (313) to switch between the first voltage generator (312) and the second voltage generator (311), and
the light reception section (12) further including a counter control section (320) comprising a first bit count controller (322), a second bit count controller (321), and a counter control switch (323) to switch between the first bit count controller (322) and the second bit count controller (321),
wherein each AD conversion section (330-1; ... ;330-N) comprises a comparator (331-1; ... ;331-N) and a counter (332-1;...;332-N), and
wherein the comparator (331-1; ... ;331-N) of each AD conversion section (330-1; ... ;330-N) is connected to a signal line of a respective pixel (31; 41) and to the DAC switch (313) for AD conversion of respective pixel (31, 41) signals read out from the respective pixels (31, 41),

wherein when the AD conversion sections (330-1,...,330-N) perform the first AD conversion with the accuracy of the first bit count:

i) the DAC switch (313) is connected to a side of the first voltage generator (312),
ii) the counter control switch (323) is connected to a side of the first bit count controller and
iii) a control signal is supplied from the first bit count controller (322) to the counters (332-1; ... ;332-N) of the respective AD conversion sections (330-1; ... ;330-N) instructing the AD conversion sections (330-1,...,330-N) to perform the first AD conversion with the accuracy of the first bit count; and

wherein when the AD conversion sections (330-1,...,330-N) perform the second ADC conversion with the accuracy of the second bit count:

i) the DAC switch (313) is connected to a side of the second voltage generator (311),
ii) the counter control switch (323) is connected to a side of the second bit count controller and
iii) a control signal is supplied from the second bit count controller (321) to the counters (332-1; ... ;332-N) of the respective AD conversion sections (330-1; ... ;330-N) instructing the AD conversion sections (330-1,...,330-N) to perform the second AD conversion with the accuracy of the second bit count; and

wherein the first bit count is a one-bit accuracy, and
wherein the first voltage generator (312) generates a constant voltage, and the second voltage generator (311) generates a voltage that varies in a ramp manner;
wherein the distance measurement method comprises the steps of:

by the AD conversion sections, switching between the first AD conversion performed with the accuracy of the first bit count and the second AD conversion performed with the accuracy of the second bit count; and
by the calculation section, measuring the distance to the target by using a result of the first or second AD conversion by the AD conversion sections.

**Patentansprüche**

1. Distanzmesseinrichtung (10), umfassend:

einen Lichtemissionsabschnitt (11), der angepasst ist, um ausgestrahltes Licht zu emittieren;
einen Lichtempfangsabschnitt (12), der eine Vielzahl von Pixeln (31, 41) einschließt und angepasst ist, um reflektiertes Licht des ausgestrahlten Lichts, das von einem Ziel reflektiert wird, zu empfangen;
einen Berechnungsabschnitt (51), der angepasst ist, um eine Distanz zum Ziel auf Basis einer Zeit, die von der Emission des ausgestrahlten Lichts bis zum Empfang des reflektierten Lichts vergeht, zu berechnen, und
einen Steuerabschnitt (53), der angepasst ist, um die Emission des ausgestrahlten Lichts durch den Lichtemissionsabschnitt (11) und den Empfang des reflektierten Lichts durch den Lichtempfangsabschnitt (12) zu steuern, wobei
der Lichtempfangsabschnitt (12) eine Vielzahl von AD-Wandlungsabschnitten (330-1, ..., 330-N) zur Analog-Digital-Wandlung, AD-Wandlung, von aus den Pixeln ausgelesenen Pixelsignalen einschließt, wobei die AD-Wandlungsabschnitte zwischen einer ersten AD-Wandlung, die mit einer Genauigkeit einer ersten Bitanzahl durchgeführt wird, und einer zweiten AD-Wandlung, die mit einer Genauigkeit einer zweiten Bitanzahl, die größer als die erste Bitanzahl ist, durchgeführt wird, umschalten,
der Lichtempfangsabschnitt (12) einen Digital-Analog-Wandler (310) einschließt, der einen ersten Spannungsgenerator (312), einen zweiten Spannungsgenerator (311) und einen DAC-Schalter (313) zum Umschalten zwischen dem ersten Spannungsgenerator (312) und dem zweiten Spannungsgenerator (311) einschließt, und
der Lichtempfangsabschnitt (12) ferner einen Zählersteuerabschnitt (320) einschließt, der eine Steuerung der ersten Bitanzahl (322), eine Steuerung der zweiten Bitanzahl (321) und einen Zählersteuerschalter (323) zum Umschalten zwischen der Steuerung der ersten Bitanzahl (322) und der Steuerung der zweiten Bitanzahl (321) umfasst;
wobei jeder AD-Wandlungsabschnitt (330-1; ...; 330-N) einen Komparator (331-1; ...; 331-N) und einen Zähler (332-1; ...; 332-N) umfasst und
wobei der Komparator (331-1; ...; 331-N)jedes AD-Wandlungsabschnitts (330-1; ...; 330-N) mit einer Signalleitung eines jeweiligen Pixels (31; 41) und mit dem DAC-Schalter (313) zur AD-Wandlung von Signalen der jeweiligen Pixel (31; 41) (Vsl), die von den jeweiligen Pixeln (31; 41) ausgelesen werden, verbunden ist,

wobei, wenn die AD-Wandlungsabschnitte (330-1, ..., 330-N) die erste AD-Wandlung mit der Genauigkeit der ersten Bitanzahl durchführen:

i) der DAC-Schalter (313) mit einer Seite des ersten Spannungsgenerators (312) verbunden ist,
ii) der Zählersteuerschalter (323) mit einer Seite der Steuerung der ersten Bitanzahl verbunden ist und
iii) ein Steuersignal von der Steuerung der ersten Bitanzahl (322) an die Zähler (332-1; ...; 332-N) der jeweiligen AD-Wandlungsabschnitte (330-1; ...; 330-N) geliefert wird, das die AD-Wandlungsabschnitte (330-1, ..., 330-N) anweist, die erste AD-Wandlung mit der Genauigkeit der ersten Bitanzahl durchzuführen;

wobei, wenn die AD-Wandlungsabschnitte (330-1, ..., 330-N) die zweite AD-Wandlung mit der Genauigkeit der zweiten Bitanzahl durchführen:

i) der DAC-Schalter (313) mit einer Seite des zweiten Spannungsgenerators (311) verbunden ist,
ii) der Zählersteuerschalter (323) mit einer Seite der Steuerung der zweiten Bitanzahl (321) verbunden ist und
iii) ein Steuersignal von der Steuerung der zweiten Bitanzahl (321) an die Zähler (332-1; ...; 332-N) der jeweiligen AD-Wandlungsabschnitte (330-1; ...; 330-N) geliefert wird, das die AD-Wandlungsabschnitte (330-1, ..., 330-N) anweist, die zweite AD-Wandlung mit der Genauigkeit der zweiten Bitanzahl durchzuführen, und

wobei die erste Bitanzahl eine Ein-Bit-Genauigkeit ist und
wobei der erste Spannungsgenerator (312) eine konstante Spannung generiert und der zweite Spannungsgenerator (311) eine Spannung generiert, die sich rampenförmig ändert; und
wobei der Berechnungsabschnitt (51) die Distanz zum Ziel durch Verwenden eines Ergebnisses der ersten oder der zweiten AD-Wandlung durch die AD-Wandlungsabschnitte misst.

2. Distanzmesseinrichtung (10) nach Anspruch 1, wobei
der Berechnungsabschnitt (51) eine schnelle Distanzmessung durch Verwenden des Ergebnisses der ersten AD-Wandlung durch die AD-Wandlungsabschnitte (330-1, ..., 330-N) durchführt, bevor er eine hochgenaue Distanzmessung durch Verwenden des Ergebnisses der zweiten AD-Wandlung durch die AD-Wandlungsabschnitte (330-1, ..., 330-N) durchführt.

3. Distanzmesseinrichtung (10) nach Anspruch 2, wobei
in einem Fall, in dem eine Sättigung anhand des Ergebnisses der schnellen Distanzmessung, die vor der hochgenauen Distanzmessung durchgeführt wird, erkannt wird:
der Steuerabschnitt (53) die Belichtung des Lichtempfangsabschnitts, die der unmittelbar danach durchzuführenden hochgenauen Distanzmessung entspricht, steuert.

4. Distanzmesseinrichtung (10) nach Anspruch 2, wobei in einem Fall, in dem eine Sättigung anhand des Ergebnisses der schnellen Distanzmessung, die vor der hochgenauen Distanzmessung durchgeführt wird, erkannt wird:
der Steuerabschnitt (53) die Lichtemission des Lichtemissionsabschnitts (11), die der unmittelbar danach durchzuführenden hochgenauen Distanzmessung entspricht, steuert.

5. Distanzmesseinrichtung (10) nach Anspruch 2, wobei in einem Fall, in dem eine Sättigung anhand des Ergebnisses der schnellen Distanzmessung, die vor der hochgenauen Distanzmessung durchgeführt wird, erkannt wird:
der Steuerabschnitt (53) die hochgenaue Distanzmessung, deren Durchführung unmittelbar danach eingeplant ist, anhält.

6. Distanzmesseinrichtung (10) nach Anspruch 2, wobei
der Berechnungsabschnitt (51) einen Erkennungsblickwinkel der unmittelbar danach durchzuführenden hochgenauen Distanzmessung auf Basis des Ergebnisses der vor der hochgenauen Distanzmessung durchgeführten schnellen Distanzmessung beschränkt.

7. Distanzmesseinrichtung (10) nach Anspruch 1, wobei
der Berechnungsabschnitt (51) eine hochgenaue Distanzmessung durch Verwenden des Ergebnisses der zweiten AD-Wandlung durch die AD-Wandlungsabschnitte (330-1, ..., 330-N) durchführt, bevor er eine schnelle Distanzmessung durch Verwenden des Ergebnisses der ersten AD-Wandlung durch die AD-Wandlungsabschnitte (330-1, ..., 330-N) durchführt.

8. Distanzmesseinrichtung (10) nach Anspruch 7, wobei

in einem Fall, in dem Bewegungsunschärfe anhand des Ergebnisses der hochgenauen Distanzmessung erkannt wird, die AD-Wandlungsabschnitte (330-1, ..., 330-N) von der zweiten AD-Wandlung auf die erste AD-Wandlung umschalten und
der Berechnungsabschnitt (51) von der hochgenauen Distanzmessung auf die schnelle Distanzmessung umschaltet.

9. Distanzmesseinrichtung (10) nach Anspruch 1, wobei
das Ergebnis einer schnellen Distanzmessung als Auslöser zum Starten des Betriebs anderer elektronischer Ausrüstung (600; 700; 800) verwendet wird.

10. Distanzmesseinrichtung (10) nach Anspruch 1, wobei
eine schnelle Distanzmessung synchron mit anderer elektronischer Ausrüstung (600; 700; 800) durchgeführt wird.

11. Distanzmesssystem, umfassend:

eine Distanzmesseinrichtung nach Anspruch 1 und
andere elektronische Ausrüstung (600; 700; 800),
wobei die andere elektronische Ausrüstung (600; 700; 800) den Betrieb unter Verwendung eines Ergebnisses der schnellen Distanzmessung durch die Distanzmesseinrichtung als Auslöser startet.

12. Distanzmessverfahren einer Distanzmesseinrichtung (10), wobei die Distanzmesseinrichtung einschließt

einen Lichtemissionsabschnitt (11), der angepasst ist, um ausgestrahltes Licht zu emittieren,
einen Lichtempfangsabschnitt (12), der eine Vielzahl von Pixeln (31; 41) einschließt und angepasst ist, um reflektiertes Licht des ausgestrahlten Lichts, das von einem Ziel reflektiert wird, zu empfangen,
einen Berechnungsabschnitt (51), der angepasst ist, um eine Distanz zum Ziel auf Basis einer Zeit, die von der Emission des ausgestrahlten Lichts bis zum Empfang des reflektierten Lichts vergeht, zu berechnen, und
einen Steuerabschnitt (53), der angepasst ist, um die Emission des ausgestrahlten Lichts durch den Lichtemissionsabschnitt (11) und den Empfang des reflektierten Lichts durch den Lichtempfangsabschnitt (12) zu steuern,
wobei der Lichtempfangsabschnitt (12) eine Vielzahl der AD-Wandlungsabschnitte (330-1, ..., 330-N) zur Analog-Digital-Wandlung, AD-Wandlung, von aus den Pixeln ausgelesenen Pixelsignalen einschließt, wobei die AD-Wandlungsabschnitte zwischen einer ersten AD-Wandlung, die mit einer Genauigkeit einer ersten Bitanzahl durchgeführt wird, und einer zweiten AD-Wandlung, die mit einer Genauigkeit einer zweiten Bitanzahl, die größer als die erste Bitanzahl ist, durchgeführt wird, umschalten,
wobei der Lichtempfangsabschnitt (12) einen Digital-Analog-Wandler (310) einschließt, der einen ersten Spannungsgenerator (312), einen zweiten Spannungsgenerator (311) und einen DAC-Schalter (313) zum Umschalten zwischen dem ersten Spannungsgenerator (312) und dem zweiten Spannungsgenerator (311) einschließt, und
wobei der Lichtempfangsabschnitt (12) ferner einen Zählersteuerabschnitt (320) einschließt, der eine Steuerung der ersten Bitanzahl (322), eine Steuerung der zweiten Bitanzahl (321) und einen Zählersteuerschalter (323) zum Umschalten zwischen der Steuerung der ersten Bitanzahl (322) und der Steuerung der zweiten Bitanzahl (321) umfasst,
wobei jeder AD-Wandlungsabschnitt (330-1; ...; 330-N) einen Komparator (331-1; ...; 331-N) und einen Zähler (332-1; ...; 332-N) umfasst und
wobei der Komparator (331-1; ...; 331-N) jedes AD-Wandlungsabschnitts (330-1; ...; 330-N) mit einer Signalleitung eines jeweiligen Pixels (31; 41) und mit dem DAC-Schalter (313) zur AD-Wandlung von Signalen jeweiliger Pixel (31, 41), die von den jeweiligen Pixeln (31, 41) ausgelesen werden, verbunden ist,
wobei, wenn die AD-Wandlungsabschnitte (330-1, ..., 330-N) die erste AD-Wandlung mit der Genauigkeit der ersten Bitanzahl durchführen:

i) der DAC-Schalter (313) mit einer Seite des ersten Spannungsgenerators (312) verbunden ist,
ii) der Zählersteuerschalter (323) mit einer Seite der Steuerung der ersten Bitanzahl verbunden ist und
iii) ein Steuersignal von der Steuerung der ersten Bitanzahl (322) an die Zähler (332-1; ...; 332-N) der jeweiligen AD-Wandlungsabschnitte (330-1; ...; 330-N) geliefert wird, das die AD-Wandlungsabschnitte (330-1, ..., 330-N) anweist, die erste AD-Wandlung mit der Genauigkeit der ersten Bitanzahl durchzuführen;

und

wobei, wenn die AD-Wandlungsabschnitte (330-1, ..., 330-N) die zweite ADC-Wandlung mit der Genauigkeit der zweiten Bitanzahl durchführen:

> i) der DAC-Schalter (313) mit einer Seite des zweiten Spannungsgenerators (311) verbunden ist,
> ii) der Zählersteuerschalter (323) mit einer Seite der Steuerung der zweiten Bitanzahl verbunden ist und
> iii) ein Steuersignal von der Steuerung der zweiten Bitanzahl (321) an die Zähler (332-1; ...; 332-N) der jeweiligen AD-Wandlungsabschnitte (330-1; ...; 330-N) geliefert wird, das die AD-Wandlungsabschnitte (330-1, ..., 330-N) anweist, die zweite AD-Wandlung mit der Genauigkeit der zweiten Bitanzahl durchzuführen; und

wobei die erste Bitanzahl eine Ein-Bit-Genauigkeit ist und
wobei der erste Spannungsgenerator (312) eine konstante Spannung generiert und der zweite Spannungsgenerator (311) eine Spannung generiert, die sich rampenförmig ändert;
wobei das Distanzmessverfahren die Schritte umfasst:

> Umschalten, durch die AD-Wandlungsabschnitte, zwischen der ersten AD-Wandlung, die mit der Genauigkeit der ersten Bitanzahl durchgeführt wird, und der zweiten AD-Wandlung, die mit der Genauigkeit der zweiten Bitanzahl durchgeführt wird; und
> Messen, durch den Berechnungsabschnitt, der Distanz zum Ziel durch Verwenden eines Ergebnisses der ersten oder der zweiten AD-Wandlung durch die AD-Wandlungsabschnitte.

## Revendications

1. Appareil de mesure de distance (10) comprenant :

> une section d'émission de lumière (11) conçue pour émettre de la lumière irradiée ;
> une section de réception de lumière (12) comportant une pluralité de pixels (31, 41) et conçue pour recevoir de la lumière réfléchie de la lumière irradiée réfléchie par une cible ;
> une section de calcul (51) conçue pour calculer une distance jusqu'à la cible en fonction du temps qu'il faut à partir de l'émission de la lumière irradiée jusqu'à la réception de la lumière réfléchie, et
> une section de commande (53) conçue pour commander l'émission de la lumière irradiée par la section d'émission de lumière (11) et la réception de la lumière réfléchie par la section de réception de lumière (12), dans lequel
> la section de réception de lumière (12) comporte une pluralité de sections de conversion AN (330-1,...,330-N) pour une conversion Analogique-Numérique, AN, de signaux de pixel lus à partir des pixels, dans lequel les sections de conversion AN commutent entre une première conversion AN mise en œuvre avec une précision d'un premier comptage de bits et une seconde conversion AN mise en œuvre avec une précision d'un second comptage de bits qui est plus grand que le premier comptage de bits,
> la section de réception de lumière (12) comporte un convertisseur numérique-analogique (310) qui comporte un premier générateur de tension (312), un second générateur de tension (311) et un commutateur DAC (313) pour commuter entre le premier générateur de tension (312) et le second générateur de tension (311), et
> la section de réception de lumière (12) comporte en outre une section de commande de compteur (320) comprenant un premier dispositif de commande de comptage de bits (322), un second dispositif de commande de comptage de bits (321), et un commutateur de commande de compteur (323) pour commuter entre le premier dispositif de commande de comptage de bits (322) et le second dispositif de commande de comptage de bits (321) ;
> dans lequel chaque section de conversion AN (330-1 ;... ;330-N) comprend un comparateur (331-1 ;... ;331-N) et un compteur (332-1 ;... ;332-N), et
> dans lequel le comparateur (331-1 ;... ;331-N) de chaque section de conversion AN (330-1 ;... ;330-N) est connecté à une ligne de signal d'un pixel (31 ; 41) respectif et au commutateur DAC (313) pour une conversion AN de signaux (Vsl) de pixel (31 ; 41) respectifs lus à partir des pixels (31 ; 41) respectifs,
> dans lequel lorsque les sections de conversion AN (330-1,...,330-N) mettent en œuvre la première conversion AN avec la précision du premier comptage de bits :

> > i) le commutateur DAC (313) est connecté à un côté du premier générateur de tension (312),

ii) le commutateur de commande de compteur (323) est connecté à un côté du premier dispositif de commande de comptage de bits et

iii) un signal de commande est alimenté du premier dispositif de commande de comptage de bits (322) aux compteurs (332-1 ;... ;332-N) des sections de conversion AN (330-1 ;... ;330-N) respectives donnant pour instruction aux sections de conversion AN (330-1,...,330-N) de mettre en oeuvre la première conversion AN avec la précision du premier comptage de bits ;

dans lequel lorsque les sections de conversion AN (330-1,...,330-N) mettent en œuvre la seconde conversion AN avec la précision du second comptage de bits :

i) le commutateur DAC (313) est connecté à un côté du second générateur de tension (311),

ii) le commutateur de commande de compteur (323) est connecté à un côté du second dispositif de commande de comptage de bits (321) et

iii) un signal de commande est alimenté du second dispositif de commande de comptage de bits (321) aux compteurs (332-1 ;... ;332-N) des sections de conversion AN (330-1 ;... ;330-N) respectives donnant pour instruction aux sections de conversion AN (330-1,...,330-N) de mettre en œuvre la seconde conversion AN avec la précision du second comptage de bits, et

dans lequel le premier comptage de bits a une précision d'un bit, et

dans lequel le premier générateur de tension (312) génère une tension constante, et le second générateur de tension (311) génère une tension qui varie à la manière d'une rampe ; et

dans lequel la section de calcul (51) mesure la distance jusqu'à la cible en utilisant un résultat de la première ou de la seconde conversion AN par les sections de conversion AN.

2. Appareil de mesure de distance (10) selon la revendication 1, dans lequel
la section de calcul (51) met en œuvre une mesure de distance rapide en utilisant le résultat de la première conversion AN par les sections de conversion AN (330-1,...,330-N) avant la mise en œuvre d'une mesure de distance à haute précision en utilisant le résultat de la seconde conversion AN par les sections de conversion AN (330-1,...,330-N).

3. Appareil de mesure de distance (10) selon la revendication 2, dans lequel
dans un cas où une saturation est détectée à partir du résultat de la mesure de distance rapide mise en œuvre avant la mesure de distance à haute précision :
la section de commande (53) commande l'exposition de la section de réception de lumière correspondant à la mesure de distance à haute précision à mettre en œuvre immédiatement par la suite.

4. Appareil de mesure de distance (10) selon la revendication 2, dans lequel dans un cas où une saturation est détectée à partir du résultat de la mesure de distance rapide mise en œuvre avant la mesure de distance à haute précision : la section de commande (53) commande l'émission de lumière de la section d'émission de lumière (11) correspondant à la mesure de distance à haute précision à mettre en œuvre immédiatement par la suite.

5. Appareil de mesure de distance (10) selon la revendication 2, dans lequel dans un cas où une saturation est détectée à partir du résultat de la mesure de distance rapide mise en œuvre avant la mesure de distance à haute précision : la section de commande (53) arrête la mesure de distance à haute précision planifiée pour mise en œuvre immédiatement par la suite.

6. Appareil de mesure de distance (10) selon la revendication 2, dans lequel
la section de calcul (51) restreint un angle de vue de détection de la mesure de distance à haute précision à mettre en œuvre immédiatement par la suite en fonction du résultat de la mesure de distance rapide mise en œuvre avant la mesure de distance à haute précision.

7. Appareil de mesure de distance (10) selon la revendication 1, dans lequel
la section de calcul (51) met en œuvre une mesure de distance à haute précision en utilisant le résultat de la seconde conversion AN par les sections de conversion AN (330-1,...,330-N) avant la mise en œuvre de la mesure de distance rapide en utilisant le résultat de la première conversion AN par les sections de conversion AN (330-1,...,330-N).

8. Appareil de mesure de distance (10) selon la revendication 7, dans lequel

dans un cas où un flou de mouvement est détecté à partir du résultat de la mesure de distance à haute précision, les sections de conversion AN (330-1,...,330-N) commutent de la seconde conversion AN sur la première conversion AN, et

la section de calcul (51) commute de la mesure de distance à haute précision sur la mesure de distance rapide.

9. Appareil de mesure de distance (10) selon la revendication 1, dans lequel

le résultat d'une mesure de distance rapide est utilisé en tant que déclencheur pour démarrer le fonctionnement d'un autre équipement électronique (600 ; 700 ; 800).

10. Appareil de mesure de distance (10) selon la revendication 1, dans lequel

une mesure de distance rapide est mise en œuvre en synchronisme avec un autre équipement électronique (600 ; 700 ; 800).

11. Système de mesure de distance comprenant :

un appareil de mesure de distance selon la revendication 1 ; et

un autre équipement électronique (600 ; 700 ; 800),

dans lequel l'autre équipement électronique (600 ; 700 ; 800) démarre un fonctionnement à l'aide d'un résultat de la mesure de distance rapide par l'appareil de mesure de distance en tant que déclencheur.

12. Procédé de mesure de distance d'un appareil de mesure de distance (10), l'appareil de mesure de distance comportant

une section d'émission de lumière (11) conçue pour émettre de la lumière irradiée,

une section de réception de lumière (12) comportant une pluralité de pixels (31, 41) et conçue pour recevoir de la lumière réfléchie de la lumière irradiée réfléchie par une cible,

une section de calcul (51) conçue pour calculer une distance jusqu'à la cible en fonction du temps qu'il faut à partir de l'émission de la lumière irradiée jusqu'à la réception de la lumière réfléchie, et

une section de commande conçue (53) pour commander l'émission de la lumière irradiée par la section d'émission de lumière (11) et la réception de la lumière réfléchie par la section de réception de lumière (12),

la section de réception de lumière (12) comportant une pluralité de sections de conversion AN (330-1,...,330-N) pour une conversion Analogique-Numérique, AN, de signaux de pixel lus à partir des pixels, dans lequel les sections de conversion AN commutent entre une première conversion AN mise en œuvre avec une précision d'un premier comptage de bits et une seconde conversion AN mise en œuvre avec une précision d'un second comptage de bits qui est plus grand que le premier comptage de bits,

la section de réception de lumière (12) comportant un convertisseur numérique-analogique (310) qui comporte un premier générateur de tension (312), un second générateur de tension (311) et un commutateur DAC (313) pour commuter entre le premier générateur de tension (312) et le second générateur de tension (311), et

la section de réception de lumière (12) comportant en outre une section de commande de compteur (320) comprenant un premier dispositif de commande de comptage de bits (322), un second dispositif de commande de comptage de bits (321), et un commutateur de commande de compteur (323) pour commuter entre le premier dispositif de commande de comptage de bits (322) et le second dispositif de commande de comptage de bits (321),

dans lequel chaque section de conversion AN (330-1 ;... ;330-N) comprend un comparateur (331-1 ;... ;331-N) et un compteur (332-1 ;... ;332-N), et

dans lequel le comparateur (331-1 ;... ;331-N) de chaque section de conversion AN (330-1 ;... ;330-N) est connecté à une ligne de signal d'un pixel (31 ; 41) respectif et au commutateur DAC (313) pour une conversion AN de signaux de pixel (31 ; 41) respectifs lus à partir des pixels (31 ; 41) respectifs,

dans lequel lorsque les sections de conversion AN (330-1,...,330-N) mettent en oeuvre la première conversion AN avec la précision du premier comptage de bits :

i) le commutateur DAC (313) est connecté à un côté du premier générateur de tension (312),

ii) le commutateur de commande de compteur (323) est connecté à un côté du premier dispositif de commande de comptage de bits et

iii) un signal de commande est alimenté du premier dispositif de commande de comptage de bits (322) aux compteurs (332-1 ;... ;332-N) des sections de conversion AN (330-1 ;... ;330-N) respectives donnant pour instruction aux sections de conversion AN (330-1,...,330-N) de mettre en œuvre la première conversion AN avec la précision du premier comptage de bits ; et

dans lequel lorsque les sections de conversion AN (330-1,...,330-N) mettent en œuvre la seconde conversion ADC avec la précision du second comptage de bits :

i) le commutateur DAC (313) est connecté à un côté du second générateur de tension (311),

ii) le commutateur de commande de compteur (323) est connecté à un côté du second dispositif de commande de comptage de bits et

iii) un signal de commande est alimenté du second dispositif de commande de comptage de bits (321) aux compteurs (332-1 ;... ;332-N) des sections de conversion AN (330-1 ;... ;330-N) respectives donnant pour instruction aux sections de conversion AN (330-1,...,330-N) de mettre en œuvre la seconde conversion AN avec la précision du second comptage de bits ; et

dans lequel le premier comptage de bits a une précision d'un bit, et

dans lequel le premier générateur de tension (312) génère une tension constante, et le second générateur de tension (311) génère une tension qui varie à la manière d'une rampe ;

dans lequel le procédé de mesure de distance comprend les étapes consistant à :

par les sections de conversion AN, commuter entre la première conversion AN mise en œuvre avec la précision du premier comptage de bits et la seconde conversion AN mise en œuvre avec la précision du second comptage de bits ; et

par la section de calcul, mesurer la distance jusqu'à la cible en utilisant un résultat de la première ou seconde conversion AN par les sections de conversion AN.

# FIG.1

# FIG.2

# FIG.3

LIGHT RECEPTION WITH 0 SHIFT

LIGHT RECEPTION WITH π/2 SHIFT

LIGHT RECEPTION WITH π SHIFT

LIGHT RECEPTION WITH 3π/2 SHIFT

IRRADIATED LIGHT

REFLECTED LIGHT

1ST RECEIVED LIGHT PULSE

2ND RECEIVED LIGHT PULSE

TapA

TapB

Sig1

$\pi/2$

TapA

TapB

Sig2

$\pi$

TapA

TapB

Sig3

$3\pi/2$

TapA

TapB

Sig4

TIME

EP 3 591 437 B1

# FIG.4

EP 3 591 437 B1

# FIG. 5

# FIG.6

Phase(0)        Phase $\left(\dfrac{\pi}{2}\right)$ · · ·

| integration | RO (Readout) (effective pixel A/D) | dead time |

EXAMPLE
ACCUMULATION=0.5ms
TIME

EXAMPLE RO (readout time)=2ms

EXAMPLE 0.1ms

Total: 2.6ms @Phase
Total: 10.4ms @4Phase=100fps

EP 3 591 437 B1

# F I G . 7

time →

Phase (0)

| integration | RO | dead time |
| --- | --- | --- |

EXAMPLE 0. 1ms

EXAMPLE
ACCUMULATION＝0. 5ms
TIME

EXAMPLE RO＝0. 2ms

Phase $\left(\dfrac{\pi}{2}\right)$ ・・・

Total: 0. 8ms @Phase
Total: 3. 2ms @4Phase＝313fps

EP 3 591 437 B1

# FIG.8

EP 3 591 437 B1

# F I G . 9

EP 3 591 437 B1

# FIG.10

## FIG.11

FIG.12

# FIG.13

# FIG.14

TARGET

TOF

·CHOOSE BETWEEN 1 bit/10 bit

·SELECT VIEW ANGLE

10

VEHICLE

# FIG.15

# FIG.16

# FIG.17

# FIG.18

TARGET

300fps  300fps

TOF SENSOR

vision SENSOR

10

800

VEHICLE

EFFECT: ALLOWS USE OF DISTANCE INFORMATION AT SAME SPEED AS IMAGE INFORMATION OF Vision SENSOR

· OPERATE Vision SENSOR IF OBJECT IS DETECTED BY TOF SENSOR IN CERTAIN DISTANCE RANGE

· OPPOSITE OF ABOVE

# FIG.19

EP 3 591 437 B1

# F I G . 2 0

EP 3 591 437 B1

# FIG.21

EP 3 591 437 B1

FIG.23

# FIG.24

EP 3 591 437 B1

# FIG.25

NOISE SUPPRESSION
EFFECT PROVIDED
SMALL LOAD

| Fmode 60MHz | PHASE CHANGE NOT APPLIED | PHASE CHANGE APPLIED |
|---|---|---|
| FREQUENCY HOPPING NOT APPLIED 60.000MHz | STATE a | STATE b |
| FREQUENCY HOPPING APPLIED 59.999MHz | STATE c | STATE d |
| FREQUENCY HOPPING APPLIED 59.992MHz | STATE e | STATE f |

NOISE SUPPRESSION
EFFECT PROVIDED
LARGE LOAD

FIG.26

START OF Fmode CHANGE PROCESS

S11 CALCULATE DIFFERENCE IN STATE TO WHICH PHASE CHANGE IS NOT APPLIED AT CURRENT FREQUENCY

S12 CALCULATE DIFFERENCE IN STATE TO WHICH PHASE CHANGE IS APPLIED AT CURRENT FREQUENCY

S13 ANY EFFECT OF APPLYING PHASE CHANGE?

NO

YES

S15 PERFORM FREQUENCY HOPPING WITHOUT APPLYING PHASE CHANGE

S14 APPLY PHASE CHANGE AT CURRENT FREQUENCY

END

EP 3 591 437 B1

# FIG.27

START OF Fmode
CHANGE PROCESS

S21
CALCULATE DIFFERENCE IN STATE
PRIOR TO FREQUENCY HOPPING

S22
PERFORM FREQUENCY HOPPING
AND CALCULATE DIFFERENCE

S23
COMPARE DIFFERENCES BETWEEN BEFORE
AND AFTER FREQUENCY HOPPING AND ADOPT
FREQUENCY WITH SMALLER DIFFERENCE

S24
CALCULATE DIFFERENCE IN STATE TO WHICH PHASE
CHANGE IS NOT APPLIED AT ADOPTED FREQUENCY

S25
CALCULATE DIFFERENCE IN STATE TO WHICH PHASE
CHANGE IS APPLIED AT ADOPTED FREQUENCY

S26
COMPARE DIFFERENCES BETWEEN WHEN PHASE
CHANGE IS APPLIED AND WHEN PHASE CHANGE IS
NOT APPLIED AND ADOPT SMALLER DIFFERENCE

END

# FIG.28

```
        ┌─────────────────────┐
        │    START OF Fmode    │
        │   CHANGE PROCESS     │
        └─────────────────────┘
                   │
                   ▼
    ┌───────────────────────────────────┐ S31
    │     CALCULATE DIFFERENCE IN STATE  │
    │     PRIOR TO FREQUENCY HOPPING     │
    └───────────────────────────────────┘
                   │
                   ▼
    ┌───────────────────────────────────┐ S32
    │     PERFORM FREQUENCY HOPPING      │
    │     AND CALCULATE DIFFERENCE       │
    └───────────────────────────────────┘
                   │
                   ▼
    ┌───────────────────────────────────┐ S33
    │  COMPARE DIFFERENCES BETWEEN BEFORE│
    │ AND AFTER FREQUENCY HOPPING AND ADOPT│
    │  FREQUENCY WITH SMALLER DIFFERENCE │
    └───────────────────────────────────┘
                   │
                   ▼
   NO ╱───────────────────────────────╲ S34
 ◄────┤  DESIRED ACCURACY ACHIEVED?    │
      ╲───────────────────────────────╱
                   │ YES
                   ▼
    ┌───────────────────────────────────┐ S35
    │ CALCULATE DIFFERENCE IN STATE TO WHICH PHASE│
    │ CHANGE IS NOT APPLIED AT ADOPTED FREQUENCY │
    └───────────────────────────────────┘
                   │
                   ▼
    ┌───────────────────────────────────┐ S36
    │ CALCULATE DIFFERENCE IN STATE TO WHICH PHASE│
    │  CHANGE IS APPLIED AT ADOPTED FREQUENCY │
    └───────────────────────────────────┘
                   │
                   ▼
    ┌───────────────────────────────────┐ S37
    │ COMPARE DIFFERENCES BETWEEN WHEN PHASE│
    │ CHANGE IS APPLIED AND WHEN PHASE CHANGE IS│
    │ NOT APPLIED AND ADOPT SMALLER DIFFERENCE │
    └───────────────────────────────────┘
                   │
                   ▼
            ┌──────────┐
            │   END    │
            └──────────┘
```

FIG.29

FIG.30

# FIG.31

A

23012

PIXEL REGION

CONTROL CIRCUIT — 23013

LOGIC CIRCUIT — 23011

23014

23010

B

23013

CONTROL CIRCUIT — 23021

PIXEL REGION — 23012

23024

LOGIC CIRCUIT — 23014

23020

C

PIXEL REGION — 23021

23012

CONTROL CIRCUIT — 23013

23024

LOGIC CIRCUIT — 23014

23020

# F I G . 3 2

EP 3 591 437 B1

EP 3 591 437 B1

# FIG.35

EP 3 591 437 B1

# FIG.36

INTEGRATED CONTROL UNIT

12050

12051

MICROCOMPUTER

12052

SOUND/IMAGE OUTPUT SECTION

12053

VEHICLE-MOUNTED NETWORK I/F

12061

AUDIO SPEAKER

12062

DISPLAY SECTION

12063

INSTRUMENT PANEL

12000

12001

COMMUNICATION NETWORK

12010

DRIVING SYSTEM CONTROL UNIT

12020

BODY SYSTEM CONTROL UNIT

12030

OUTSIDE-VEHICLE INFORMATION DETECTING UNIT

12040

IN-VEHICLE INFORMATION DETECTING UNIT

12031

IMAGING SECTION

12041

DRIVER STATE DETECTING SECTION

EP 3 591 437 B1

FIG.37

**EP 3 591 437 B1**

**REFERENCES CITED IN THE DESCRIPTION**

**Patent documents cited in the description**

- JP H0395402 A
- WO 2008152647 A2
- JP 2016090268 A

**Non-patent literature cited in the description**

- Multiple range imaging camera operation with minimal performance impact. **R.Z.WHYTE** ; **A.D.PAYNE** ; **A.A.DORRINGTON** ; **M.J.CREE**. Proc.SPIE-IS&T Electronic Imaging. SPIE, 2010, vol. 7538, 75380I